(19) Europäisches Patentamt
European Patent Office
Office européen des brevets

(11) **EP 3 540 978 B1**

(12) **EUROPEAN PATENT SPECIFICATION**

(45) Date of publication and mention
of the grant of the patent:
**02.12.2020 Bulletin 2020/49**

(51) Int Cl.:
*H04B 7/06* (2006.01)      *H01Q 3/26* (2006.01)
*H01Q 3/34* (2006.01)      *H01Q 25/02* (2006.01)
*H04B 7/10* (2017.01)

(21) Application number: **18742153.2**

(22) Date of filing: **17.01.2018**

(86) International application number:
**PCT/JP2018/001221**

(87) International publication number:
**WO 2018/135531 (26.07.2018 Gazette 2018/30)**

(54) **ANTENNA DEVICE AND ANTENNA EXCITATION METHOD**

ANTENNENVORRICHTUNG UND VERFAHREN ZUR ANTENNENERREGUNG

DISPOSITIF D'ANTENNE ET PROCÉDÉ D'EXCITATION D'ANTENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.01.2017 PCT/JP2017/001363**

(43) Date of publication of application:
**18.09.2019 Bulletin 2019/38**

(73) Proprietor: **Mitsubishi Electric Corporation
Chiyoda-ku
Tokyo 100-8310 (JP)**

(72) Inventors:
• **KURIYAMA, Tasuku**
  **Tokyo 100-8310 (JP)**
• **FUKASAWA, Toru**
  **Tokyo 100-8310 (JP)**

(74) Representative: **Pfenning, Meinig & Partner mbB
Patent- und Rechtsanwälte
Theresienhöhe 11a
80339 München (DE)**

(56) References cited:
JP-A- 2013 093 665      JP-A- 2014 155 050
JP-A- 2015 177 494      JP-B1- 6 042 045
JP-B1- 6 042 045

• **KURIYAMA, TASUKU ET AL.: 'A Study of Limited Communication Area for Directional Modulation Using Active Phased Array Antenna with Sum-Difference pattern combining method'** IEICE TECH. REP. vol. 116, no. 397, 12 January 2017, pages 135 - 140
• **KURIYAMA, TASUKU ET AL.: 'Limited Communication Area for Directional Modulation Using Active Phased Array Antenna: Discussion'** PROCEEDINGS OF THE 2016 IEICE SOCIETY CONFERENCE (1) vol. 1, 06 September 2016, page 130
• **DING Y. ET AL.: 'A far-field pattern separation approach for the synthesis of directional modulation transmitter arrays'** 2014 XXXIST URSI GENERAL ASSEMBLY AND SCIENTIFIC SYMPOSIUM (URSI GASS) , 16 August 2014, XP032663682
• **DING Y. ET AL.: 'Directional modulation far-field pattern separation synthesis approach'** IET MICROWAVES, ANTENNAS & PROPAGATION vol. 9, no. 1, 29 December 2014, pages 41 - 48, XP006050755

**Description**

TECHNICAL FIELD

The present invention relates to an antenna device and an antenna excitation method for respectively controlling phases of carrier wave signals to be given to a plurality of element antennas included in an array antenna.

BACKGROUND ART

In an antenna device mounting a phased array antenna, it is possible to form a directional beam by respectively controlling amplitudes and phases of carrier wave signals to be given to a plurality of element antennas constituting the phased array antenna.

Non-Patent Literature 1 described below discloses an antenna device for implementing confidential communication whose communicable area is restricted, by mounting an array antenna (hereinafter referred to as "directional modulation array antenna") for transmitting a signal only in a direction in the vicinity of a communication direction including the communication direction.

The antenna device disclosed in Non-Patent Literature 1 generates a baseband modulation signal that is a signal to be communicated, by applying modulation processing of Quadrature Phase Shift Keying (QPSK) to a transmission bit sequence.

Upon generation of the baseband modulation signal, the antenna device calculates an excitation distribution that corresponds an amplitude and phase of each signal point in the baseband modulation signal with an electric field amplitude and phase of an antenna pattern in the communication direction.

Then, the antenna device gives the calculated excitation distribution by time division to a carrier wave signal to be given to a plurality of element antennas constituting the directional modulation array antenna.

The excitation distribution given by time division can be obtained by solving an evaluation function based on bit error rates in a plurality of directions and the like by using an optimization method such as a Genetic Algorithm (GA).

Patent Literature 1 relates to a communication excitation distribution calculating unit that calculates an excitation distribution of a communication beam using an excitation phase distribution that directs a main lobe of the communication beam in a communication direction; an interference excitation distribution calculating unit that calculates an excitation distribution of an interference beam using an excitation phase distribution that forms a null of an antenna pattern in the communication direction; and an excitation distribution combining unit that combines the excitation distribution of the communication beam and the excitation distribution of the interference beam.

CITATION LIST

NON-PATENT LITERATURE

Non-Patent Literature 1: M. P. Daly, "Directional Modulation Technique for Phased Arrays", IEEE Trans. Antennas Propagat., vol.57, pp.2633-2640, 2009.

PATENT LITERATURE

Patent Literature 1: JP 6 042045 B1

SUMMARY OF INVENTION

TECHNICAL PROBLEM

Since the conventional antenna device is configured as described above, it is possible to calculate the excitation distribution given by time division can be calculated if the optimization method such as GA is used. However, in a case where the excitation distribution is calculated by using the optimization method, since a calculation amount of the excitation distribution is enormous, there has been a problem that it may take a long time to obtain the excitation distribution.

The present invention has been made to solve the above problem, and it is an object to provide an antenna device and an antenna excitation method capable of shortening time required for obtaining the excitation distribution as compared with a case where the excitation distribution is calculated by using the optimization method.

## SOLUTION TO PROBLEM

An antenna device according to the present invention is provided with: an array antenna including a plurality of element antennas for radiating carrier wave signals; a communication signal generating unit for generating a communication signal that is a signal to be communicated; an interference signal generating unit for generating an interference signal to be an interference wave of the communication signal by adjusting a phase of the communication signal generated by the communication signal generating unit; an excitation distribution calculating unit for calculating each of an excitation distribution of a communication beam and an excitation distribution of an interference beam, of which sums of squares of an excitation amplitude of the communication beam that is a radio wave for transmitting the communication signal and an excitation amplitude of the interference beam that is a radio wave for transmitting the interference signal are the same to each other for each of the plurality of element antennas; and an excitation distribution synthesizing unit for synthesizing the excitation distribution of the communication beam and the excitation distribution of the interference beam each calculated by the excitation distribution calculating unit, and a phase control unit respectively controls phases of the carrier wave signals to be given to the plurality of element antennas in accordance with an excitation distribution after synthesis by the excitation distribution synthesizing unit.

## ADVANTAGEOUS EFFECTS OF INVENTION

According to the present invention, there are provided: the excitation distribution calculating unit for calculating each of the excitation distribution of the communication beam and the excitation distribution of the interference beam, of which the sums of squares of the excitation amplitude of the communication beam that is the radio wave for transmitting the communication signal and the excitation amplitude of the interference beam that is the radio wave for transmitting the interference signal are the same to each other for each of the plurality of element antennas; and the excitation distribution synthesizing unit for synthesizing the excitation distribution of the communication beam and the excitation distribution of the interference beam each calculated by the excitation distribution calculating unit, and the phase control unit respectively controls the phases of the carrier wave signals to be given to the plurality of element antennas in accordance with the excitation distribution after the synthesis by the excitation distribution synthesizing unit, so that there is an effect that the time required for obtaining the excitation distribution can be shortened as compared with the case where the excitation distribution is calculated by using the optimization method.

## BRIEF DESCRIPTION OF DRAWINGS

FIG. 1 is a configuration diagram illustrating an antenna device according to a first embodiment of the present invention.
FIG. 2 is a hardware configuration diagram of a signal processing unit 10 in the antenna device according to the first embodiment of the present invention.
FIG. 3 is a hardware configuration diagram of a computer in a case where the signal processing unit 10 is implemented by software, firmware, or the like.
FIG. 4 is a flowchart illustrating operation of a carrier wave signal generating unit 1, a distributor 2, phase adjusters 31-1 to 31-K, amplifiers 33-1 to 33-K, and element antennas 3-1 to 3-K.
FIG. 5 is a flowchart illustrating processing of an excitation amplitude distribution setting unit 14.
FIG. 6 is a flowchart illustrating processing of a communication signal generating unit 11 and a communication excitation distribution calculating unit 18.
FIG. 7 is a flowchart illustrating processing of an interference signal generating unit 12 and an interference excitation distribution calculating unit 21.
FIG. 8 is a flowchart illustrating processing of a phase distribution setting unit 24 and an excitation distribution synthesizing unit 25.
FIG. 9 is an explanatory diagram illustrating an example of a first excitation amplitude distribution A set by a first excitation amplitude distribution setting unit 16 and a second excitation amplitude distribution B set by a second excitation amplitude distribution setting unit 17.
FIG. 10 is an explanatory diagram illustrating an amplitude characteristic of a synthesized excitation distribution in each QPSK modulation symbol in a case where the first excitation amplitude distribution A and the second excitation amplitude distribution B are set as illustrated in FIG. 9.
FIG. 11 is an explanatory diagram illustrating an amplitude characteristic of an antenna pattern calculated from an excitation distribution W1(t) of a communication beam and an excitation distribution W2(t) of an interference beam in the case where the first excitation amplitude distribution A and the second excitation amplitude distribution B are set as illustrated in FIG. 9.

FIG. 12 is an explanatory diagram illustrating a phase characteristic of a radiation pattern calculated from a synthesized excitation distribution E(t).

FIG. 13 is an explanatory diagram illustrating a phase characteristic of the synthesized excitation distribution in each QPSK modulation symbol in the case where the first excitation amplitude distribution A and the second excitation amplitude distribution B are set as illustrated in FIG. 9.

FIG. 14 is an explanatory diagram illustrating an example of the first excitation amplitude distribution A set by the first excitation amplitude distribution setting unit 16 and the second excitation amplitude distribution B set by the second excitation amplitude distribution setting unit 17.

FIG. 15 is a configuration diagram illustrating an antenna device according to a second embodiment of the present invention.

FIG. 16 is a flowchart illustrating operation of a carrier wave signal generating unit 70, digital signal processors 81-1 to 81-K, D/A converters 83-1 to 83-K, the amplifiers 33-1 to 33-K, and the element antennas 3-1 to 3-K.

FIG. 17 is a configuration diagram illustrating an antenna device according to a third embodiment of the present invention.

FIG. 18 is a configuration diagram illustrating an interference signal generating unit 90.

FIG. 19 is a flowchart illustrating operation of an excitation amplitude distribution setting unit 92.

FIG. 20 is a flowchart illustrating operation of the interference signal generating unit 90.

FIG. 21 is an explanatory diagram illustrating an amplitude characteristic of the synthesized excitation distribution E(t) implementing 16QAM.

FIG. 22 is an explanatory diagram illustrating a phase characteristic of the synthesized excitation distribution E(t).

FIG. 23 is an explanatory diagram illustrating an angle characteristic of a bit error rate in a case where a communication direction is 0 degrees.

FIG. 24 is a configuration diagram illustrating an antenna device according to a fourth embodiment of the present invention.

FIG. 25 is a flowchart illustrating operation of an excitation amplitude distribution setting unit 102.

FIG. 26 is a configuration diagram illustrating an antenna device according to a fifth embodiment of the present invention.

FIG. 27 is a configuration diagram illustrating an antenna device according to a sixth embodiment of the present invention.

FIG. 28A is an explanatory diagram illustrating an example of a linear array antenna, FIG. 28B is an explanatory diagram illustrating an example of a planar array antenna, and FIG. 28C is an explanatory diagram illustrating an example of a conformal array antenna.

## DESCRIPTION OF EMBODIMENTS

Hereinafter, to explain the present invention in more detail, embodiments for carrying out the present invention will be described with reference to the accompanying drawings. The invention is defined by the independent claims. Advantageous embodiments are described in the dependent claims. Embodiments and/or examples mentioned in the description that do not fall under the scope of the claims are useful for understanding the invention.

First Embodiment.

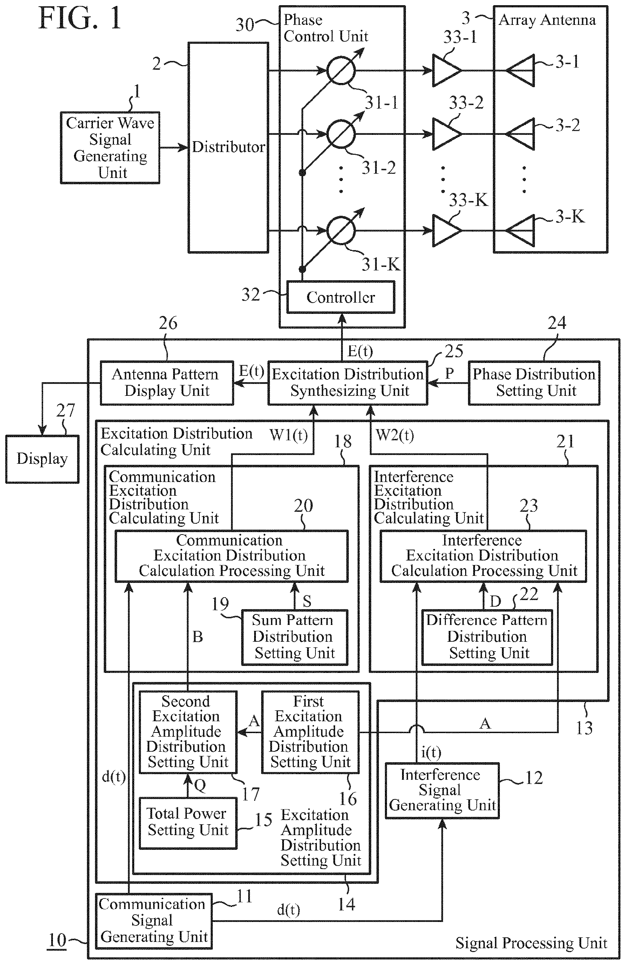

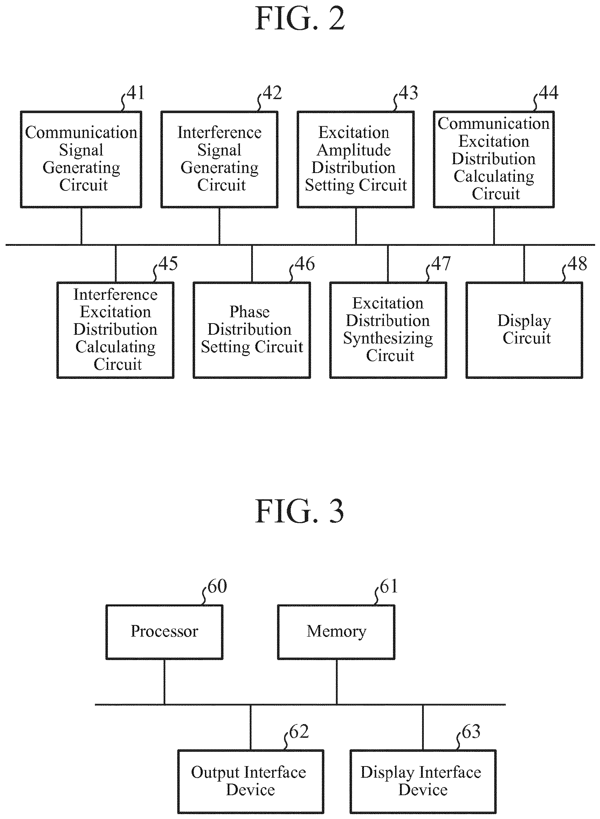

FIG. 1 is a configuration diagram illustrating an antenna device according to a first embodiment of the present invention, and FIG. 2 is a hardware configuration diagram of a signal processing unit 10 in the antenna device according to the first embodiment of the present invention.

In FIGS. 1 and 2, a carrier wave signal generating unit 1 is a signal oscillator for generating a radio frequency carrier wave signal, for example.

A distributor 2 distributes the carrier wave signal generated by the carrier wave signal generating unit 1 into K (K is an integer equal to or greater than 2) carrier wave signals, and respectively outputs the K carrier wave signals to phase adjusters 31-1 to 31-K of a phase control unit 30.

An array antenna 3 includes K element antennas 3-1 to 3-K.

The element antenna 3-k (k = 1, 2, ..., K) radiates to space the carrier wave signal passing through the phase adjuster 31-k and an amplifier 33-k of the phase control unit 30.

The signal processing unit 10 includes a communication signal generating unit 11, an interference signal generating unit 12, an excitation distribution calculating unit 13, a phase distribution setting unit 24, an excitation distribution synthesizing unit 25, and an antenna pattern display 26.

The communication signal generating unit 11 is implemented by, for example, a communication signal generating circuit 41 illustrated in FIG. 2.

The communication signal generating unit 11 generates a communication signal d(t) that is a signal to be communicated, by applying baseband modulation processing such as QPSK to a transmission bit sequence externally given, for example.

In addition, the communication signal generating unit 11 performs processing of outputting the communication signal d(t) to each of the interference signal generating unit 12 and a communication excitation distribution calculation processing unit 20.

Here, an example is described in which the communication signal generating unit 11 uses QPSK as a modulation method for the transmission bit sequence; however, the modulation method is not limited to QPSK. The communication signal generating unit 11 may use, for example, a modulation method of Binary Phase Shift Keying (BPSK) or 8PSK, as the modulation method for the transmission bit sequence.

Note that, the transmission bit sequence is a sequence in which information to be transmitted is encoded.

The interference signal generating unit 12 is implemented by, for example, an interference signal generating circuit 42 illustrated in FIG. 2.

The interference signal generating unit 12 generates an interference signal i(t) to be an interference wave of the communication signal d(t) by adjusting a phase of the communication signal d(t) generated by the communication signal generating unit 11, and performs processing of outputting the interference signal i(t) to an interference excitation distribution calculation processing unit 23.

The interference signal generating unit 12 generates the interference signal i(t) by shifting the phase of the communication signal d(t) generated by the communication signal generating unit 11 by 90 degrees or -90 degrees, for example.

The excitation distribution calculating unit 13 includes an excitation amplitude distribution setting unit 14, a communication excitation distribution calculating unit 18, and an interference excitation distribution calculating unit 21.

The excitation distribution calculating unit 13 performs processing of calculating each of an excitation distribution W1(t) of a communication beam and an excitation distribution W2(t) of an interference beam, of which sums of squares of the excitation amplitude of the communication beam and the excitation amplitude of the interference beam are the same to each other for each of the K element antennas 3-1 to 3-K.

The communication beam is a radio wave for transmitting the communication signal d(t), and the interference beam is a radio wave for transmitting the interference signal i(t).

The excitation amplitude distribution setting unit 14 includes a total power setting unit 15, a first excitation amplitude distribution setting unit 16, and a second excitation amplitude distribution setting unit 17, and is implemented by, for example, an excitation amplitude distribution setting circuit 43 illustrated in FIG. 2.

The excitation amplitude distribution setting unit 14 sets a total power value Q that is a sum of squares of the excitation amplitude of the communication beam and the excitation amplitude of the interference beam in one element antenna 3-k, as a common set value with respect to the element antennas 3-1 to 3-K included in the array antenna 3.

In addition, the excitation amplitude distribution setting unit 14 performs processing of setting each of a first excitation amplitude distribution A with respect to the element antennas 3-1 to 3-K and a second excitation amplitude distribution B with respect to the element antennas 3-1 to 3-K.

The total power setting unit 15 performs processing of setting the total power value Q that is the sum of squares of the excitation amplitude of the communication beam and the excitation amplitude of the interference beam in one element antenna, as the common set value in the K element antennas 3-1 to 3-K.

The first excitation amplitude distribution setting unit 16 performs processing of setting the first excitation amplitude distribution A with respect to the K element antennas 3-1 to 3-K.

The first excitation amplitude distribution setting unit 16 sets, as the first excitation amplitude distribution A, for example, an excitation amplitude distribution of which excitation amplitudes of the interference beams with respect to the element antennas 3-1 and 3-K at ends of the K element antennas 3-1 to 3-K are smaller than excitation amplitudes of the interference beams with respect to the element antennas 3-2 to 3-(K - 1) at other than the ends.

The second excitation amplitude distribution setting unit 17 performs processing of setting the second excitation amplitude distribution B with respect to the K element antennas 3-1 to 3-K.

The second excitation amplitude distribution setting unit 17 sets, for example, the second excitation amplitude distribution B of which a sum of squares of the excitation amplitude with respect to the element antenna 3-k in the first excitation amplitude distribution A and the excitation amplitude with respect to the element antenna 3-k in the second excitation amplitude distribution B is the total power value Q.

The communication excitation distribution calculating unit 18 includes a sum pattern distribution setting unit 19 and the communication excitation distribution calculation processing unit 20, and is implemented by, for example, a communication excitation distribution calculating circuit 44 illustrated in FIG. 2.

The communication excitation distribution calculating unit 18 performs processing of setting an excitation phase distribution S of a sum pattern in the array antenna 3.

In addition, the communication excitation distribution calculating unit 18 performs processing of calculating the excitation distribution W1(t) of the communication beam by using the excitation phase distribution S of the sum pattern, the communication signal d(t), and the second excitation amplitude distribution B set by the second excitation amplitude distribution setting unit 17.

The sum pattern distribution setting unit 19 performs processing of setting the excitation phase distribution S of the sum pattern in the array antenna 3, as an excitation phase distribution of the communication beam.

The communication excitation distribution calculation processing unit 20 performs processing of calculating the excitation distribution W1(t) of the communication beam by using the excitation phase distribution S of the sum pattern, the communication signal d(t) generated by the communication signal generating unit 11, and the second excitation amplitude distribution B set by the second excitation amplitude distribution setting unit 17.

The interference excitation distribution calculating unit 21 includes a difference pattern distribution setting unit 22 and the interference excitation distribution calculation processing unit 23, and is implemented by, for example, an interference excitation distribution calculating circuit 45 illustrated in FIG. 2.

The interference excitation distribution calculating unit 21 performs processing of calculating the excitation distribution W2(t) of the interference beam by using an excitation phase distribution D of a difference pattern, the interference signal i(t), and the first excitation amplitude distribution A set by the first excitation amplitude distribution setting unit 16.

The difference pattern distribution setting unit 22 performs processing of setting the excitation phase distribution D of the difference pattern in the array antenna 3, as an excitation phase distribution forming a zero point of an antenna pattern in a communication direction of the communication signal d(t).

The interference excitation distribution calculation processing unit 23 performs processing of calculating the excitation distribution W2(t) of the interference beam by using the excitation phase distribution D of the difference pattern, the interference signal i(t) generated by the interference signal generating unit 12, and the first excitation amplitude distribution A set by the first excitation amplitude distribution setting unit 16.

The phase distribution setting unit 24 is implemented by, for example, a phase distribution setting circuit 46 illustrated in FIG. 2.

The phase distribution setting unit 24 performs processing of setting a beam scanning phase distribution P that defines the communication direction of the communication signal d(t).

The excitation distribution synthesizing unit 25 is implemented by, for example, an excitation distribution synthesizing circuit 47 illustrated in FIG. 2.

The excitation distribution synthesizing unit 25 performs processing of synthesizing the excitation distribution W1(t) of the communication beam calculated by the communication excitation distribution calculation processing unit 20 and the excitation distribution W2(t) of the interference beam calculated by the interference excitation distribution calculation processing unit 23.

In addition, the excitation distribution synthesizing unit 25 performs processing of multiplying a synthesized excitation distribution by the beam scanning phase distribution P set by the phase distribution setting unit 24.

In addition, the excitation distribution synthesizing unit 25 performs processing of outputting an excitation distribution obtained by multiplication by the beam scanning phase distribution P, as an excitation distribution E(t) after synthesis (hereinafter referred to as "synthesized excitation distribution E(t)), to each of the phase control unit 30 and the antenna pattern display unit 26.

The antenna pattern display unit 26 is implemented by, for example, a display circuit 48 illustrated in FIG. 2.

The antenna pattern display unit 26 performs processing of calculating an antenna pattern from the synthesized excitation distribution E(t) output from the excitation distribution synthesizing unit 25, and outputting the antenna pattern to a display 27.

The display 27 includes a liquid crystal display, for example, and displays the antenna pattern output from the antenna pattern display unit 26.

The phase control unit 30 includes the phase adjusters 31-1 to 31-K and a controller 32, and adjusts phases of the K carrier wave signals distributed by the distributor 2 in accordance with the synthesized excitation distribution E(t) output from the excitation distribution synthesizing unit 25.

The phase adjuster 31-k (k = 1, 2, ..., K) includes, for example, a phase shifter, adjusts the phase of the carrier wave signal distributed by the distributor 2 by an adjustment amount of the phase indicated by a control signal output from the controller 32, and outputs a carrier wave signal after phase adjustment to the amplifier 33-k.

The controller 32 respectively determines adjustment amounts of the phases in the phase adjusters 31-1 to 31-K in accordance with the synthesized excitation distribution E(t) output from the excitation distribution synthesizing unit 25, and respectively outputs control signals indicating the determined adjustment amounts of the phases to the phase adjusters 31-1 to 31-K.

The amplifier 33-k (k = 1, 2, ..., K) amplifies the carrier wave signal after the phase adjustment output from the phase adjuster 31-k, and outputs a carrier wave signal after amplification to the element antenna 3-k.

In FIG. 1, the antenna device is assumed in which each of components of the signal processing unit 10 in the antenna device is implemented by dedicated hardware as illustrated in FIG. 2, the components being the communication signal generating unit 11, the interference signal generating unit 12, the excitation distribution calculating unit 13, the phase distribution setting unit 24, the excitation distribution synthesizing unit 25, and the antenna pattern display unit 26.

That is, the antenna device is assumed in which the signal processing unit 10 is implemented by the communication signal generating circuit 41, the interference signal generating circuit 42, the excitation amplitude distribution setting circuit 43, the communication excitation distribution calculating circuit 44, the interference excitation distribution calculating circuit 45, the phase distribution setting circuit 46, the excitation distribution synthesizing circuit 47, and the display circuit 48.

Examples of circuits includes a single circuit, a composite circuit, a programmed processor, a parallel-programmed processor, an application specific integrated circuit (ASIC), a field-programmable gate array (FPGA), or a combination thereof, the circuits being the communication signal generating circuit 41, the interference signal generating circuit 42, the excitation amplitude distribution setting circuit 43, the communication excitation distribution calculating circuit 44, the interference excitation distribution calculating circuit 45, the phase distribution setting circuit 46, the excitation distribution synthesizing circuit 47, and the display circuit 48.

However, the components of the signal processing unit 10 of the antenna device are not limited to those implemented by dedicated hardware, and the signal processing unit 10 may be implemented by software, firmware, or a combination of software and firmware.

Software or firmware is stored as a program in a memory of a computer. The computer means hardware for executing a program, and examples of the computer include a central processing unit (CPU), a central processing device, a processing device, an arithmetic device, a microprocessor, a microcomputer, a processor, a digital signal processor (DSP), and the like.

FIG. 3 is a hardware configuration diagram of a computer in a case where the signal processing unit 10 is implemented by software, firmware, or the like.

In the case where the signal processing unit 10 is implemented by software, firmware, or the like, it is sufficient that a program is stored in a memory 61 for causing the computer to execute a processing procedure of the communication signal generating unit 11, the interference signal generating unit 12, the excitation distribution calculating unit 13, the phase distribution setting unit 24, the excitation distribution synthesizing unit 25, and the antenna pattern display unit 26, and a processor 60 of the computer executes the program stored in the memory 61.

Examples of the memory 61 of the computer include a nonvolatile or volatile semiconductor memory such as a random access memory (RAM), a read only memory (ROM), a flash memory, an erasable programmable read only memory (EPROM), and an electrically erasable programmable read only memory (EEPROM); a magnetic disk, a flexible disk, an optical disc, a compact disc, a mini disc, a digital versatile disc (DVD), and the like.

An output interface device 62 is an interface device including a signal input/output port such as a USB port, a serial port, or the like.

The output interface device 62 is connected to the phase control unit 30, and outputs the synthesized excitation distribution E(t) output from the excitation distribution synthesizing unit 25 to the phase control unit 30.

A display interface device 63 is an interface device for connecting to the display 27, and outputs the antenna pattern output from the antenna pattern display unit 26 to the display 27.

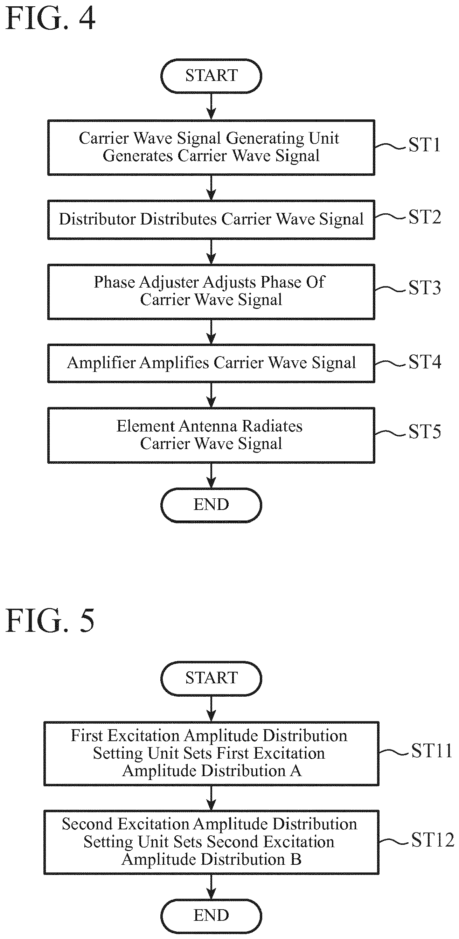

FIG. 4 is a flowchart illustrating operation of the carrier wave signal generating unit 1, the distributor 2, the phase adjusters 31-1 to 31-K, the amplifiers 33-1 to 33-K, and the element antennas 3-1 to 3-K.

FIG. 5 is a flowchart illustrating processing of the excitation amplitude distribution setting unit 14.

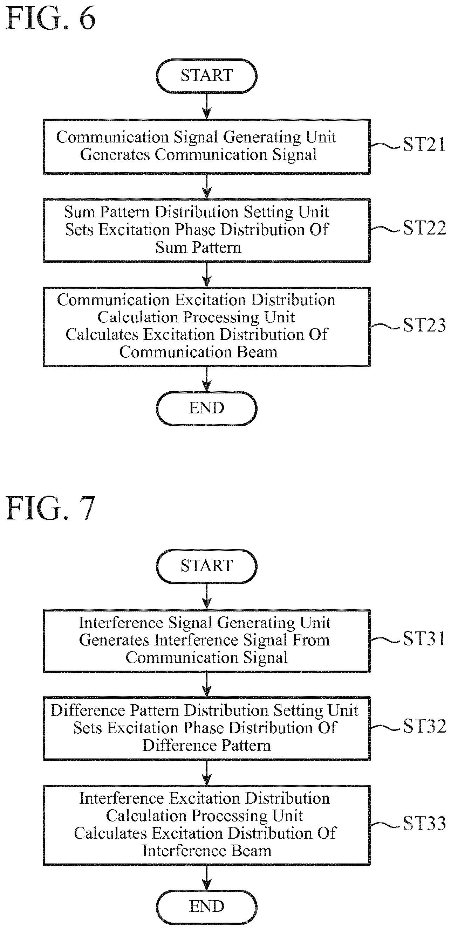

FIG. 6 is a flowchart illustrating processing of the communication signal generating unit 11 and the communication excitation distribution calculating unit 18.

FIG. 7 is a flowchart illustrating processing of the interference signal generating unit 12 and the interference excitation distribution calculating unit 21.

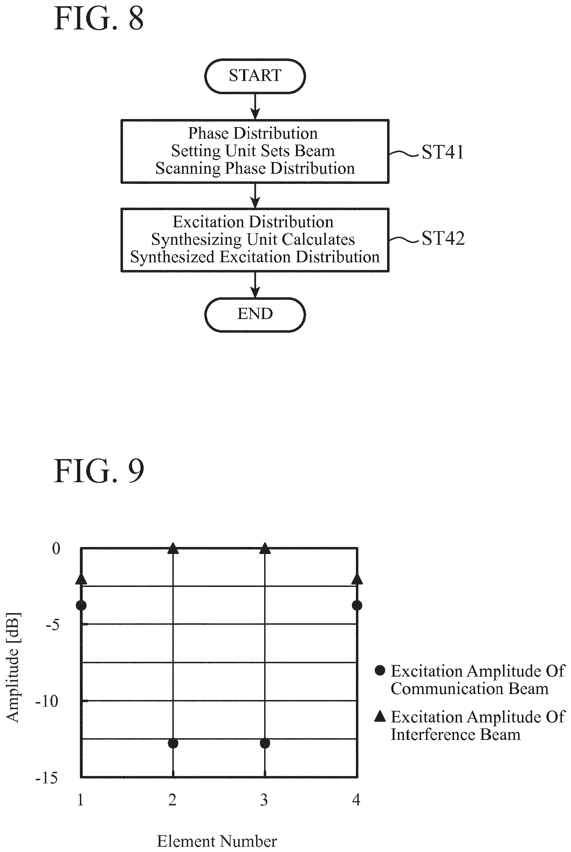

FIG. 8 is a flowchart illustrating processing of the phase distribution setting unit 24 and the excitation distribution synthesizing unit 25.

Next, an antenna excitation method will be described that is a processing procedure of the antenna device illustrated in FIG. 1.

In the first embodiment, an example will be described in which a symbol of QPSK modulation is transmitted by the array antenna 3 including the K element antennas 3-1 to 3-K.

The carrier wave signal generating unit 1 generates, for example, a radio frequency carrier wave signal and outputs the carrier wave signal to the distributor 2 (step ST1 in FIG. 4).

Upon receiving the carrier wave signal from the carrier wave signal generating unit 1, the distributor 2 distributes the carrier wave signal into K carrier wave signals, and respectively outputs the K carrier wave signals to the phase adjusters 31-1 to 31-K of the phase control unit 30 (step ST2 in FIG. 4).

The first excitation amplitude distribution setting unit 16 of the excitation amplitude distribution setting unit 14 sets the first excitation amplitude distribution A that increases a gain in a side lobe direction of the difference pattern in the array antenna 3 (step ST11 in FIG. 5).

Then, the first excitation amplitude distribution setting unit 16 outputs the first excitation amplitude distribution A to each of the second excitation amplitude distribution setting unit 17 and the interference excitation distribution calculation processing unit 23.

The first excitation amplitude distribution setting unit 16 sets, as the first excitation amplitude distribution A, for example, an excitation amplitude distribution of which the excitation amplitudes of the interference beams with respect to the element antennas 3-1 and 3-K at the ends of the K element antennas 3-1 to 3-K are smaller than the excitation amplitudes of the interference beams with respect to the element antennas 3-2 to 3-(K - 1) at other than the ends.

Here, the first excitation amplitude distribution A is represented by a matrix of K rows and one column. Individual element of the matrix is a positive number, and individual element is denoted as $A_k$. Hereinafter, the element $A_k$ may be referred to as "excitation amplitude $A_k$".

The total power setting unit 15 of the excitation amplitude distribution setting unit 14 sets the total power value Q that is the sum of squares of the excitation amplitude of the communication beam and the excitation amplitude of the interference beam in one element antenna, as the common set value with respect to the K element antennas 3-1 to 3-K. For example, Q = 1.05 is set as the total power value.

Upon receiving the first excitation amplitude distribution A from the first excitation amplitude distribution setting unit 16, the second excitation amplitude distribution setting unit 17 of the excitation amplitude distribution setting unit 14 sets the second excitation amplitude distribution B with respect to the element antennas 3-1 to 3-K (step ST12 in FIG. 5).

Here, the second excitation amplitude distribution B is represented by a matrix of K rows and one column. Each element of the matrix is a positive number, and each element is denoted as $B_k$. Hereinafter, the element $B_k$ may be referred to as "excitation amplitude $B_k$".

The second excitation amplitude distribution setting unit 17 sets, for example, the second excitation amplitude distribution B of which the sum of squares of the excitation amplitude $A_k$ with respect to the element antenna 3-k in the first excitation amplitude distribution A and the excitation amplitude $B_k$ with respect to the element antenna 3-k in the second excitation amplitude distribution B is the total power value Q.

Thus, a relationship between the element $A_k$ of the first excitation amplitude distribution A and the element $B_k$ of the second excitation amplitude distribution B in the element antenna 3-k (k = 1, 2, ..., K) is expressed by equation (1) below.

$$B_k = \sqrt{Q - A_k{}^2} \qquad\qquad (1)$$

FIG. 9 is an explanatory diagram illustrating an example of the first excitation amplitude distribution A set by the first excitation amplitude distribution setting unit 16 and the second excitation amplitude distribution B set by the second excitation amplitude distribution setting unit 17.

FIG. 9 illustrates an example in which the array antenna 3 includes four element antennas, and the total power value is Q = 1.05.

In FIG. 9, a mark △ indicating the excitation amplitude of the interference beam corresponds to the element $A_k$ of the first excitation amplitude distribution A. In the first embodiment, the excitation amplitudes $A_1$ and $A_4$ of the interference beams with respect to the element antennas 3-1 and 3-4 at the ends are smaller than the excitation amplitude $A_2$ and $A_3$ of the interference beams with respect to the element antennas 3-2 and 3-3 at other than the ends.

A mark ○ indicating the excitation amplitude of the communication beam corresponds to the element $B_k$ of the second excitation amplitude distribution B. In the first embodiment, the excitation amplitudes $B_1$ and $B_4$ of the communication beams with respect to the element antennas 3-1 and 3-4 at the ends are larger than the excitation amplitude $B_2$ and $B_3$ of the communication beams with respect to the element antennas 3-2 and 3-3 at other than the ends.

For example, when a transmission bit sequence in which information to be transmitted is encoded is externally given, the communication signal generating unit 11 generates the communication signal d(t) that is a signal to be communicated, by applying baseband modulation processing of QPSK to the transmission bit sequence (step ST21 in FIG. 6).

The communication signal generating unit 11 outputs the communication signal d(t) to each of the interference signal generating unit 12 and the communication excitation distribution calculation processing unit 20.

In the communication signal d(t), t represents time, and in a case where the modulation method is QPSK, each signal point in the communication signal d(t) is represented as $\exp(j\pi/4)$, $\exp(j3\pi/4)$ $\exp(-j3\pi/4)$, and $\exp(j\pi/4)$.

The sum pattern distribution setting unit 19 of the communication excitation distribution calculating unit 18 sets the excitation phase distribution S of the sum pattern in the array antenna 3, as the excitation phase distribution of the communication beam that is a radio wave for transmitting the communication signal d(t) generated by the communication signal generating unit 11 (step ST22 in FIG. 6).

The excitation phase distribution S of the sum pattern is represented by a matrix of K rows and one column. Since individual element of the matrix is a complex number and an excitation phase of the sum pattern is 0 degrees, the excitation phase distribution S is expressed by a matrix having exp(j0) as an element, as indicated by equation (2) below.

$$S = \begin{bmatrix} S_1 \\ S_2 \\ \vdots \\ S_K \end{bmatrix} = \begin{bmatrix} \exp(j0) \\ \exp(j0) \\ \vdots \\ \exp(j0) \end{bmatrix} = \begin{bmatrix} 1 \\ 1 \\ \vdots \\ 1 \end{bmatrix} \qquad (2)$$

When the sum pattern distribution setting unit 19 sets the excitation phase distribution S of the sum pattern, the communication excitation distribution calculation processing unit 20 of the communication excitation distribution calculating unit 18 calculates the excitation distribution W1(t) of the communication beam by using the excitation phase distribution S of the sum pattern (step ST23 in FIG. 6).

That is, as indicated by equation (3) below, the communication excitation distribution calculation processing unit 20 calculates the excitation distribution W1(t) of the communication beam, by multiplying the communication signal d(t) generated by the communication signal generating unit 11 by the excitation phase distribution S of the sum pattern and a diagonal matrix of the second excitation amplitude distribution B generated by the second excitation amplitude distribution setting unit 17.

$$W1(t) = d(t) \cdot diag(B) \cdot S \qquad (3)$$

In equation (3), diag(B) is a diagonal matrix with individual element $B_k$ in the second excitation amplitude distribution B as a diagonal element.

Upon receiving the communication signal d(t) from the communication signal generating unit 11, the interference signal generating unit 12 generates the interference signal i(t) to be the interference wave of the communication signal d(t) by adjusting the phase of the communication signal d(t) (step ST31 in FIG. 7).

The interference signal generating unit 12 outputs the interference signal i(t) to the interference excitation distribution calculation processing unit 23.

The interference signal generating unit 12 generates the interference signal i(t) by shifting the phase of the communication signal d(t) generated by the communication signal generating unit 11 by 90 degrees or -90 degrees, for example.

Specifically, in a case where the communication signal d(t) at a certain time t is $\exp(j\pi/4)$, when a phase difference with respect to the communication signal d(t) is $\pi/2$ (= 90 degrees), the interference signal i(t) is $\exp(j3\pi/4)$.

Thus, the interference signal i(t) is expressed by equation (4) below.

$$i(t) = d(t) \cdot \exp(j\pi/2) = j \cdot d(t) \qquad (4)$$

Note that, a sign of the phase difference of the interference signal i(t) with respect to the communication signal d(t) may be constant, or the sign of the phase difference may be switched randomly.

In addition, the sign of the phase difference may be switched for each modulation symbol of the communication signal d(t).

Specifically, it is as follows.

For example, in a case where the phase of the communication signal d(t) exists in a first quadrant as in the case where the communication signal d(t) at the certain time t is $\exp(j\pi/4)$, the phase difference between the communication signal d(t) and the interference signal i(t) is set as a first phase difference.

In a case where the phase of the communication signal d(t) exists in a second quadrant as in a case where the communication signal d(t) at the certain time t is $\exp(-j3\pi/4)$, the phase difference between the communication signal d(t) and the interference signal i(t) is set as a second phase difference.

In addition, in a case where the phase of the communication signal d(t) exists in a third quadrant as in a case where the communication signal d(t) at the certain time t is $\exp(j3\pi/4)$, the phase difference between the communication signal d(t) and the interference signal i(t) is set as a third phase difference.

Further, in a case where the phase of the communication signal d(t) exists in a fourth quadrant as in a case where the communication signal d(t) at the certain time t is exp(jπ/4), the phase difference between the communication signal d(t) and the interference signal i(t) is set as a fourth phase difference.

At this time, the interference signal generating unit 12 generates the interference signal i(t) of which the first phase difference and the third phase difference are phase differences respectively having different signs. For example, the interference signal generating unit 12 generates the interference signal i(t) of which the first phase difference is exp(jπ/2) and the third phase difference is exp(-jπ/2).

In addition, the interference signal generating unit 12 generates an interference signal i(t) of which the second phase difference and the fourth phase difference are phase differences respectively having different signs. For example, the interference signal generating unit 12 generates the interference signal i(t) of which the second phase difference is exp(-jπ/2) and the fourth phase difference is exp(jπ/2).

The difference pattern distribution setting unit 22 of the interference excitation distribution calculating unit 21 sets the excitation phase distribution D of the difference pattern in the array antenna 3, as the excitation phase distribution forming the zero point of the antenna pattern in the communication direction of the communication signal d(t) (step ST32 in FIG. 7).

The excitation phase distribution D of the difference pattern is represented by a matrix of K rows and one column.

For example, if the elements from the first row to the (K/2)th row of the matrix are exp(jπ), and the elements from the ((K/2) + 1)th row to the Kth row are exp(j0), the excitation phase distribution D of the difference pattern is expressed by equation (5) below.

$$D = \begin{bmatrix} D_1 \\ \vdots \\ D_{K/2} \\ D_{K/2+1} \\ \vdots \\ D_K \end{bmatrix} = \begin{bmatrix} \exp(j\pi) \\ \vdots \\ \exp(j\pi) \\ \exp(j0) \\ \vdots \\ \exp(j0) \end{bmatrix} = \begin{bmatrix} -1 \\ \vdots \\ -1 \\ 1 \\ \vdots \\ 1 \end{bmatrix} \qquad (5)$$

Here, an example is described in which the elements from the first row to the (K/2)th row of the matrix are exp(jπ), and the elements from the ((K/2) + 1)th row to the Kth row are exp(j0); however, the setting of phase values may be reversed. That is, the elements from the first row to the (K/2)th row may be exp(j0), and the elements from the ((K/2) + 1)th row to the Kth row may be exp(jπ).

When the difference pattern distribution setting unit 22 sets the excitation phase distribution D of the difference pattern, the interference excitation distribution calculation processing unit 23 of the interference excitation distribution calculating unit 21 calculates the excitation distribution W2(t) of the interference beam by using the excitation phase distribution D of the difference pattern (step ST33 in FIG. 7).

That is, as indicated by equation (6) below, the interference excitation distribution calculation processing unit 23 calculates the excitation distribution W2(t) of the interference beam, by multiplying the interference signal i(t) by the excitation phase distribution D of the difference pattern and a diagonal matrix of the first excitation amplitude distribution A set by the first excitation amplitude distribution setting unit 16.

$$W2(t) = i(t) \bullet diag(A) \bullet D \qquad (6)$$

In equation (6), diag(A) is a diagonal matrix with individual element $A_k$ in the first excitation amplitude distribution A as a diagonal element.

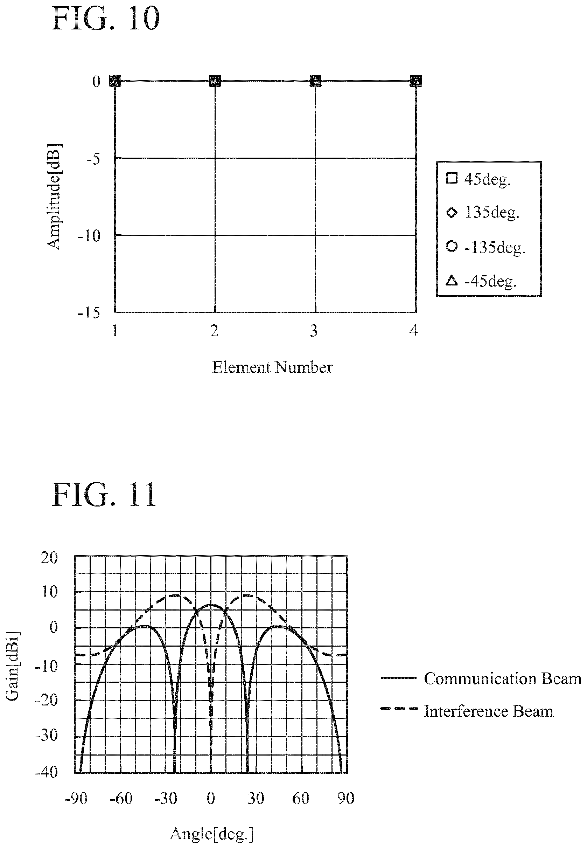

FIG. 11 is an explanatory diagram illustrating an amplitude characteristic of the antenna pattern calculated from the excitation distribution W1(t) of the communication beam and the excitation distribution W2(t) of the interference beam in a case where the first excitation amplitude distribution A and the second excitation amplitude distribution B are set as illustrated in FIG. 9.

The communication beam formed from the excitation distribution W1(t) is a sum pattern with a direction of 0 degrees as the communication direction. The interference beam formed from the excitation distribution W2(t) is a difference pattern of which the zero point of the antenna pattern is formed in the direction of 0 degrees. As described above, the interference signal is not transmitted in the communication direction, but in the side lobe direction of the communication beam, power of the interference signal can be made larger than that of the communication signal, and demodulation can be made impossible.

The phase distribution setting unit 24 sets the beam scanning phase distribution P that defines the communication direction of the communication signal d(t) (step ST41 in FIG. 8).

In a case where it is necessary to appropriately switch the communication direction, it is necessary to mount the phase distribution setting unit 24.

On the other hand, in a case where the communication direction is fixed, such as a case where the communication direction is always a front direction of the array antenna 3, the phase distribution setting unit 24 does not have to be mounted, and the excitation distribution synthesizing unit 25 may store the beam scanning phase distribution P set in advance.

The excitation distribution synthesizing unit 25 synthesizes the excitation distribution W1(t) of the communication beam calculated by the communication excitation distribution calculation processing unit 20 and the excitation distribution W2(t) of the interference beam calculated by the interference excitation distribution calculation processing unit 23.

Then, as indicated by equation (7) below, the excitation distribution synthesizing unit 25 calculates the synthesized excitation distribution E(t), by multiplying a synthesized excitation distribution (W1(t) + W2(t)) by a diagonal matrix of the beam scanning phase distribution P and normalization factor $1/\sqrt{Q}$ (step ST42 in FIG. 8).

$$E(t) = \frac{diag(P) \cdot (W1(t) + W2(t))}{\sqrt{Q}} \qquad (7)$$

Here, when the excitation distribution W1(t) of the communication beam indicated by equation (3) and the excitation distribution W2(t) of the interference beam indicated by equation (6) are assigned to equation (7), the synthesized excitation distribution E(t) is expressed by equation (8) below.

$$E(t) = \frac{diag(P) \cdot (d(t) \cdot diag(B) \cdot S + i(t) \cdot diag(A) \cdot D)}{\sqrt{Q}} \qquad (8)$$

Next, when the interference signal i(t) indicated by equation (4) is substituted to equation (8), the synthesized excitation distribution E(t) is expressed by equation (9) below.

$$E(t) = \frac{diag(P) \cdot (d(t) \cdot diag(B) \cdot S + j \cdot d(t) \cdot diag(A) \cdot D)}{\sqrt{Q}} \qquad (9)$$

Next, when the element $B_k$ of the second excitation amplitude distribution B indicated by equation (1), the excitation phase distribution S of the sum pattern indicated by equation (2), and the excitation phase distribution D of the difference pattern indicated by equation (5) are substituted to equation (9), the synthesized excitation distribution E(t) is expressed by equation (10) below.

$$E(t) = \frac{1}{\sqrt{Q}} \cdot diag(P) \cdot d(t) \cdot \left\{ \begin{bmatrix} \sqrt{Q - A_1^2} & & 0 \\ & \ddots & \\ 0 & & \sqrt{Q - A_K^2} \end{bmatrix} \cdot \begin{bmatrix} 1 \\ 1 \\ \vdots \\ 1 \end{bmatrix} + j \cdot \begin{bmatrix} A_1 & & & & 0 \\ & \ddots & & & \\ & & A_{K/2} & & \\ & & & A_{K/2+1} & \\ & & & & \ddots \\ 0 & & & & A_K \end{bmatrix} \cdot \begin{bmatrix} -1 \\ \vdots \\ -1 \\ 1 \\ \vdots \\ 1 \end{bmatrix} \right\}$$

$$= \frac{1}{\sqrt{Q}} \cdot diag(P) \cdot d(t) \cdot \left\{ \begin{bmatrix} \sqrt{Q - A_1^2} - jA_1 \\ \vdots \\ \sqrt{Q - A_{K/2}^2} - jA_{K/2} \\ \sqrt{Q - A_{K/2+1}^2} + jA_{K/2+1} \\ \vdots \\ \sqrt{Q - A_K^2} + jA_K \end{bmatrix} \right\} \qquad (10)$$

Here, when the amplitude of each term in equation (10) is considered, diag(P) is a term representing a beam scanning phase and is a term whose amplitude is constant.

The communication signal d(t) is a communication signal whose modulation method is QPSK and whose amplitude is constant.

Amplitudes of the elements in the last column vector are all constant at √Q as indicated by equation (11) below.

$$\sqrt{\left(\sqrt{Q - A_k^2}\right)^2 + A_k^2} = \sqrt{Q} \qquad\qquad (1\ 1)$$

k = 1, 2, ..., K

Thus, excitation amplitudes of the element antennas 3-1 to 3-K in the synthesized excitation distribution E(t) are all the same.

FIG. 10 is an explanatory diagram illustrating an amplitude characteristic of the synthesized excitation distribution in each QPSK modulation symbol in the case where the first excitation amplitude distribution A and the second excitation amplitude distribution B are set as illustrated in FIG. 9.

FIG. 10 illustrates that the synthesized excitation is constant even when the modulation symbol of the communication signal d(t) changes.

In FIG. 10, since the modulation method is QPSK, modulation symbols are illustrated of 45 deg (= exp(jπ/4)), 135 deg (= exp(j3π/4)), -135 deg (= exp(-j3π/4)), and -45 deg (= exp(-jπ/4)).

The controller 32 of the phase control unit 30 respectively determines the adjustment amounts of the phases in the phase adjusters 31-1 to 31-K from the phase characteristic of the synthesized excitation distribution E(t).

Hereinafter, determination processing of the adjustment amount of the phase by the controller 32 will be specifically described.

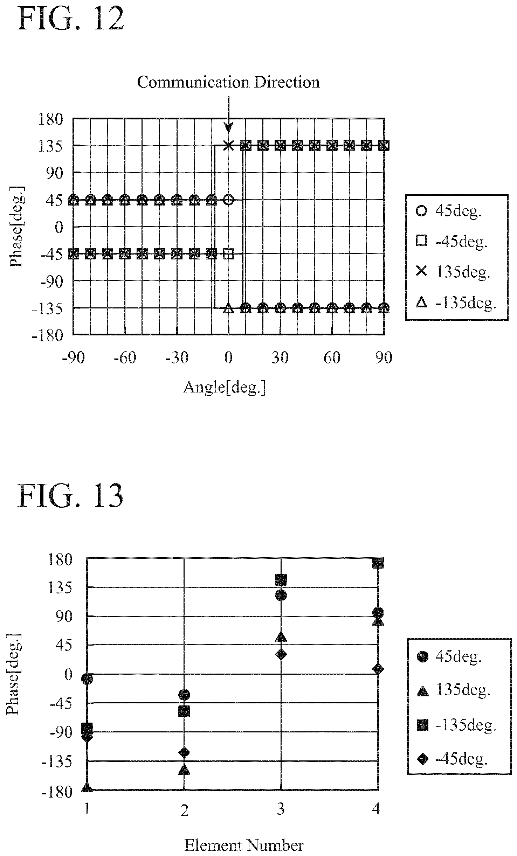

FIG. 13 is an explanatory diagram illustrating the phase characteristic of the synthesized excitation distribution in each QPSK modulation symbol in the case where the first excitation amplitude distribution A and the second excitation amplitude distribution B are set as illustrated in FIG. 9.

FIG. 13 illustrates an example in which the number of element antennas included in the array antenna 3 is four. That is, FIG. 13 illustrates the phase characteristic of the synthesized excitation distribution in modulation symbols of 45 deg, 135 deg, -135 deg, and -45 deg.

As illustrated in FIG. 13, the phase characteristic of the synthesized excitation distribution E(t) varies depending on the modulation symbol of the communication signal d(t).

Here, the adjustment amount of the phase of the carrier wave signal to be given to the element antenna 3-2 among the four carrier wave signals distributed by the distributor 2 will be described.

FIG. 13 illustrates that, for example, the phase of the modulation symbol of 45 deg is about -32 degrees, and the phase of the modulation symbol of 135 deg is about - 148 degrees, as the phase of the carrier wave signal to be given to the element antenna 3-2. In addition, it is illustrated that the phase of the modulation symbol of -135 deg is about -58 degrees, and the phase of the modulation symbol of -45 deg is about -122 degrees.

The controller 32 respectively determines adjustment amounts of the phases in the phase adjuster 31-2 in which the phase of the modulation symbol of 45 deg is about -32 degrees, and the phase of the modulation symbol of 135 deg is about -148 degrees, in the carrier wave signal to be given to the element antenna 3-2.

In addition, the controller 32 respectively determines adjustment amounts of the phases in the phase adjuster 31-2 in which the phase of the modulation symbol of - 135 deg is about -58 degrees, and the phase of the modulation symbol of -45 deg is about -122 degrees, in the carrier wave signal to be given to the element antenna 3-2.

Upon respectively determining the adjustment amounts of the phases in the phase adjusters 31-1 to 31-K, the controller 32 respectively outputs control signals indicating the determined adjustment amounts of the phases to the phase adjusters 31-1 to 31-K.

Upon receiving the control signal from the controller 32, the phase adjuster 31-k (k = 1, 2, ..., K) adjusts the phase of the carrier wave signal distributed by the distributor 2 by the adjustment amount indicated by the control signal, and outputs the carrier wave signal after the phase adjustment to the amplifier 33-k (step ST3 in FIG. 4).

Upon receiving the carrier wave signal after the phase adjustment from the phase adjuster 31-k, the amplifier 33-k (k = 1, 2, ..., K) amplifies the carrier wave signal after the phase adjustment, and outputs the carrier wave signal after the amplification to the element antenna 3-k (step ST4 in FIG. 4).

As a result, the carrier wave signals whose amplitudes and phases are adjusted are respectively radiated from the element antennas 3-1 to 3-K to the space (step ST5 in FIG. 4).

Upon receiving the synthesized excitation distribution E(t) from the excitation distribution synthesizing unit 25, the antenna pattern display unit 26 calculates the antenna pattern from the synthesized excitation distribution E(t), and outputs the antenna pattern to the display 27.

FIG. 12 is an explanatory diagram illustrating a phase characteristic of a radiation pattern calculated from the synthesized excitation distribution E(t).

Although processing itself of calculating the phase characteristic of the radiation pattern from the synthesized excitation distribution E(t) is a known technique and will not be described in detail, in FIG. 12, the phase characteristic of the antenna pattern is illustrated in the modulation symbols of 45 deg, 135 deg, -135 deg, and -45 deg.

In FIG. 12, the communication direction is 0 degrees. In the vicinity of the communication direction, the phase value coincides with the phase value of the QPSK symbol, but in directions other than the communication direction, the phase value is aggregated into two states.

For this reason, the QPSK symbol can be received in the vicinity of the communication direction, but the QPSK symbol are not received in the directions other than the communication direction. Thus, even when the synthesized excitation is constant, confidentiality by the directional modulation array antenna can be implemented.

The display 27 displays the antenna pattern output from the antenna pattern display unit 26.

The antenna device of the first embodiment includes the excitation distribution calculating unit 13 for calculating the excitation distribution W1(t) of the communication beam and the excitation distribution W2(t) of the interference beam of which the sums of squares of the excitation amplitude of the communication beam and the excitation amplitude of the interference beam are the same to each other for each of the plurality of element antennas 3-1 to 3-K.

In addition, the antenna device of the first embodiment includes the excitation distribution synthesizing unit 25 for synthesizing the excitation distribution W1(t) of the communication beam and the excitation distribution W2(t) of the interference beam calculated by the excitation distribution calculating unit 13, and outputting the synthesized excitation distribution E(t).

Then, in the antenna device of the first embodiment, the phase control unit 30 respectively controls the phases of the carrier wave signals to be given to the plurality of element antennas 3-1 to 3-K in accordance with the synthesized excitation distribution E(t) output from the excitation distribution synthesizing unit 25.

Thus, the antenna device of the first embodiment has an effect that the time required for obtaining the synthesized excitation distribution E(t) can be shortened as compared with the case where the synthesized excitation distribution E(t) is calculated by using an optimization method.

That is, in a case where the synthesized excitation distribution E(t) is calculated by using the optimization method, a calculation amount of the synthesized excitation distribution E(t) is enormous, but in the antenna device of the first embodiment, the synthesized excitation distribution E(t) can be obtained by calculation of equation (10) with an extremely small calculation amount as compared with the optimization method. For this reason, the time required for obtaining the synthesized excitation distribution E(t) is shortened.

In addition, according to the first embodiment, even when the modulation symbol of the communication signal d(t) changes, the excitation amplitude is constant, so that the antenna device can be implemented without use of expensive amplifiers having wide dynamic ranges, as the amplifiers 33-1 to 33-K.

In addition, according to the first embodiment, confidential communication can be implemented without control of the excitation amplitude of the plurality of carrier wave signals distributed by the distributor 2. For this reason, simplification of control can be achieved as compared with the antenna device controlling both the excitation amplitude and the excitation phase of the plurality of carrier wave signals.

In the first embodiment, the example has been described in which the first excitation amplitude distribution setting unit 16 sets the first excitation amplitude distribution A of which the excitation amplitudes $A_1$ and $A_K$ of the interference beam with respect to the element antennas 3-1 and 3-K at the ends are smaller than the excitation amplitudes $A_2$ to $A_{K-1}$ of the interference beam with respect to the element antennas 3-2 to 3-(K - 1) at other than the ends.

In the example, the second excitation amplitude distribution B set by the second excitation amplitude distribution setting unit 17 is an excitation amplitude distribution of which the excitation amplitudes $B_1$ and $B_K$ of the communication beam with respect to the element antennas 3-1 and 3-K at the ends are larger than the excitation amplitudes $B_2$ to $B_{K-1}$ of the communication beam with respect to the element antennas 3-2 to 3-(K - 1) at other than the ends.

The first embodiment is not limited to the example.

For example, the first excitation amplitude distribution setting unit 16 may set the first excitation amplitude distribution A of which the excitation amplitudes $A_1$ and $A_K$ of the interference beam with respect to the element antennas 3-1 and 3-K at the ends are larger than the excitation amplitudes $A_2$ to $A_{K-1}$ of the interference beam with respect to the element antennas 3-2 to 3-(K - 1) at other than the ends.

In the example, the second excitation amplitude distribution B set by the second excitation amplitude distribution setting unit 17 is an excitation amplitude distribution of which the excitation amplitudes $B_1$ and $B_K$ of the communication beam with respect to the element antennas 3-1 and 3-K at the ends are smaller than the excitation amplitudes $B_2$ to $B_{K-1}$ of the communication beam with respect to the element antennas 3-2 to 3-(K - 1) at other than the ends.

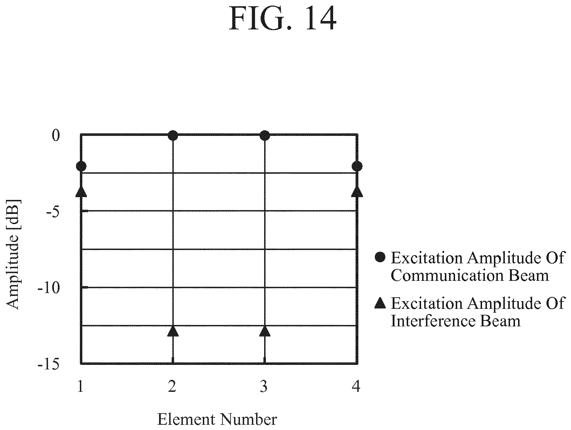

FIG. 14 is an explanatory diagram illustrating an example of the first excitation amplitude distribution A set by the first excitation amplitude distribution setting unit 16 and the second excitation amplitude distribution B set by the second excitation amplitude distribution setting unit 17.

FIG. 14 illustrates an example in which the array antenna 3 includes four element antennas, and the total power value is Q = 1.05.

In FIG. 14, a mark $\triangle$ indicating the excitation amplitude of the interference beam corresponds to the element $A_k$ of the first excitation amplitude distribution A, and a mark $\bigcirc$ indicating the excitation amplitude of the communication beam corresponds to the element $B_k$ of the second excitation amplitude distribution B.

In the example of FIG. 14, the excitation amplitudes $A_1$ and $A_4$ of the interference beam with respect to the element antennas 3-1 and 3-4 at the ends are larger than the excitation amplitudes $A_2$ and $A_3$ of the interference beam with respect to the element antennas 3-2 and 3-3 at other than the ends.

In addition, the excitation amplitudes $B_1$ and $B_4$ of the communication beam with respect to the element antennas 3-1 and 3-4 at the ends are smaller than the excitation amplitudes $B_2$ and $B_3$ of the communication beam with respect to the element antennas 3-2 and 3-3 at other than the ends.

In this case, the second excitation amplitude distribution B attenuates the excitation amplitude of the communication beam with respect to the element antennas 3-1 and 3-K at the ends, so that the side lobe of the communication beam decreases. For this reason, the communication area can be limited by transmission of the interference beam formed by the first excitation amplitude distribution A while the level is reduced of the communication signal d(t) transmitted in the side lobe direction.

Second Embodiment.

In the first embodiment, the example has been described in which the phase adjusters 31-1 to 31-K respectively adjust the phases of the carrier wave signals distributed by the distributor 2 in accordance with the adjustment amounts of the phases indicated by the control signals output from the controller 32.

In this second embodiment, an example will be described in which a carrier wave signal generating unit 70 generates carrier wave signals that are digital signals, and adjusts the phases of the carrier wave signals with digital signal processing.

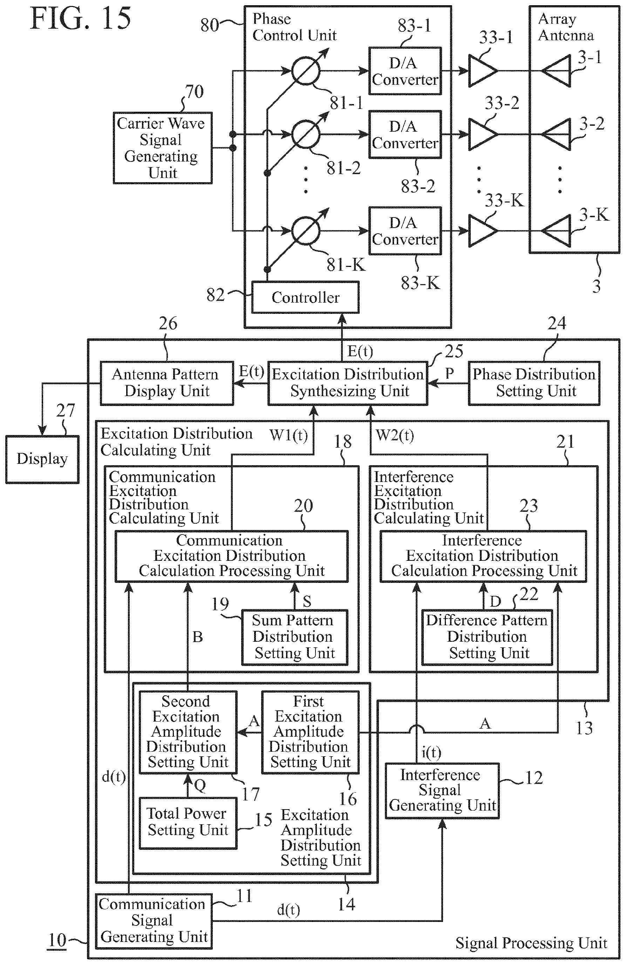

FIG. 15 is a configuration diagram illustrating an antenna device according to the second embodiment of the present invention, and in FIG. 15, since the same reference numerals as those in FIG. 1 denote the same or corresponding portions, the description thereof will be omitted.

The carrier wave signal generating unit 70 is a signal oscillator for generating the carrier wave signals that are the digital signals, and respectively outputting the carrier wave signals to digital signal processors 81-1 to 81-K of a phase control unit 80.

The phase control unit 80 includes the digital signal processors 81-1 to 81-K, a controller 82, and digital/analog converters (hereinafter referred to as "D/A converters") 83-1 to 83-K.

The phase control unit 80 adjusts each of the phases of the K carrier wave signals with digital signal processing in accordance with the synthesized excitation distribution E(t) output from the excitation distribution synthesizing unit 25.

The digital signal processor 81-k (k = 1, 2, ..., K) includes, for example, a semiconductor integrated circuit mounting a CPU, or a one-chip microprocessor.

The digital signal processor 81-k adjusts the phase of the carrier wave signal output from the carrier wave signal generating unit 70 by the adjustment amount of the phase indicated by the control signal output from the controller 82 with digital signal processing, and outputs a carrier wave signal after phase adjustment to the D/A converter 83-k.

The controller 82 respectively determines the adjustment amounts of the phases in the digital signal processors 81-1 to 81-K in accordance with the synthesized excitation distribution E(t) output from the excitation distribution synthesizing unit 25, and respectively outputs the control signals indicating the determined adjustment amounts of the phases to the digital signal processors 81-1 to 81-K.

The D/A converter 83-k (k = 1, 2, ..., K) converts the carrier wave signal after the phase adjustment output from the digital signal processor 81-k into an analog signal, and outputs the analog signal to the amplifier 33-k.

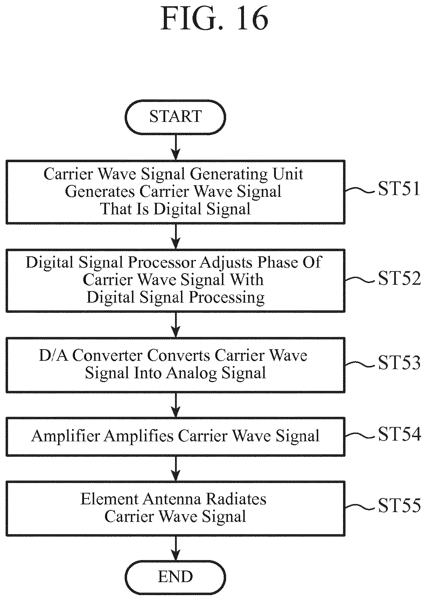

FIG. 16 is a flowchart illustrating operation of the carrier wave signal generating unit 70, the digital signal processors 81-1 to 81-K, the D/A converters 83-1 to 83-K, the amplifiers 33-1 to 33-K, and the element antennas 3-1 to 3-K.

Next, the operation will be described.

Since processing of the signal processing unit 10 are similar to those of the first embodiment, here, processing will be described other than the signal processing unit 10.

The carrier wave signal generating unit 70 generates the carrier wave signals that are the digital signals, and respectively outputs the carrier wave signals to the digital signal processors 81-1 to 81-K of the phase control unit 80 (step ST51 in FIG. 16).

When the excitation distribution synthesizing unit 25 calculates the synthesized excitation distribution E(t), the controller 82 of the phase control unit 80 respectively determines the adjustment amounts of the phases in accordance with the synthesized excitation distribution E(t) similarly to the controller 32 of FIG. 1 in the first embodiment.

Upon respectively determining the adjustment amounts of the phases, the controller 82 respectively outputs the control signals indicating the determined adjustment amounts of the phases to the digital signal processors 81-1 to 81-K.

Upon receiving the control signal from the controller 82, the digital signal processor 81-k (k = 1, 2, ..., K) adjusts the phase of the carrier wave signal output from the carrier wave signal generating unit 70 by the adjustment amount of the phase indicated by the control signal with digital signal processing (step ST52 in FIG. 16).

The digital signal processor 81-k outputs the carrier wave signal after the phase adjustment to the D/A converter 83-k.

Upon receiving the carrier wave signal after the phase adjustment from the digital signal processor 81-k, the D/A converter 83-k (k = 1, 2, ..., K) converts the carrier wave signal after the phase adjustment into an analog signal, and outputs an analog carrier wave signal to the amplifier 33-k (step ST53 in FIG. 16).

Upon receiving the analog carrier wave signal from the D/A converter 83-k, the amplifier 33-k (k = 1, 2, ..., K) amplifies the carrier wave signal, and outputs a carrier wave signal after amplification to the element antenna 3-k (step ST54 in FIG. 16).

As a result, the carrier wave signals whose amplitudes and phases are adjusted are respectively radiated from the element antennas 3-1 to 3-K to the space (step ST55 in FIG. 16).

In the antenna device of the second embodiment, the digital signal processors 81-1 to 81-K respectively adjust the phases of the carrier wave signals in accordance with the adjustment amounts of the phases indicated by the control signals output from the controller 82 with digital signal processing. Thus, according to the second embodiment, there is an effect that formation accuracy of the antenna pattern can be improved as compared with the first embodiment.

Third Embodiment.

In the first embodiment, the example has been described in which the communication signal generating unit 11 uses the modulation method such as QPSK in which the amplitude of the modulation symbol is constant, as the modulation method for the transmission bit sequence.

In this third embodiment, an example will be described in which a modulation method is used such as Quadrature Amplitude Modulation (QAM) in which the amplitude of the modulation symbol varies, as the modulation method for the transmission bit sequence.

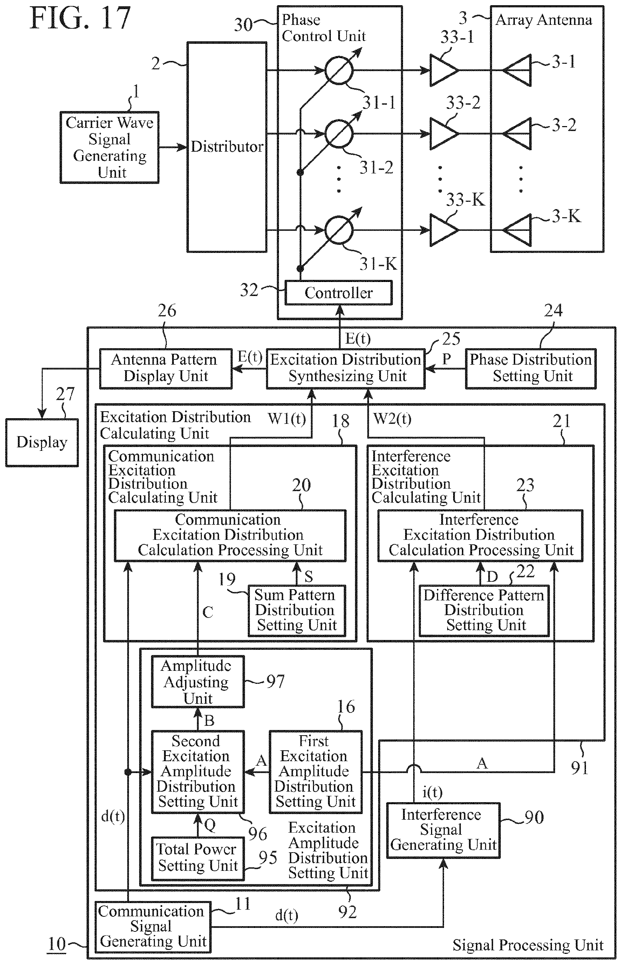

FIG. 17 is a configuration diagram illustrating an antenna device according to the third embodiment of the present invention.

In FIG. 17, since the same reference numerals as those in FIG. 1 denote the same or corresponding portions, the description thereof will be omitted.

The signal processing unit 10 includes the communication signal generating unit 11, an interference signal generating unit 90, an excitation distribution calculating unit 91, the phase distribution setting unit 24, the excitation distribution synthesizing unit 25, and the antenna pattern display unit 26.

The interference signal generating unit 90 performs processing of generating the interference signal i(t) to be the interference wave of the communication signal d(t), and outputting the interference signal i(t) to the interference excitation distribution calculation processing unit 23.

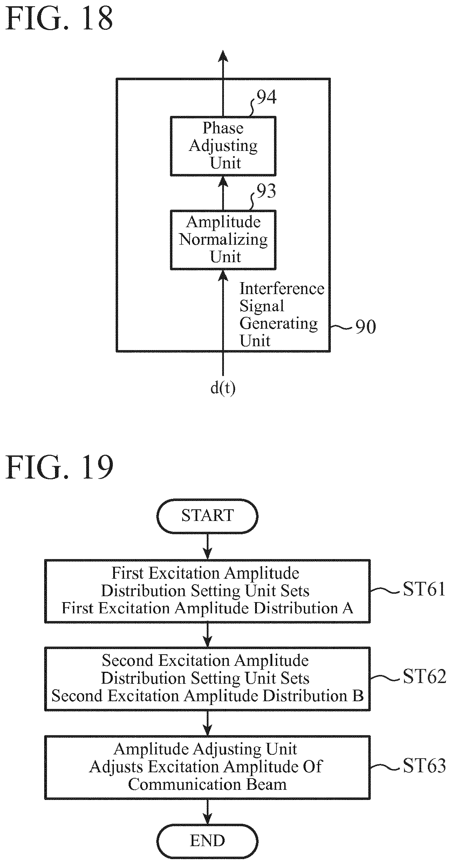

FIG. 18 is a configuration diagram illustrating the interference signal generating unit 90.

The interference signal generating unit 90 includes an amplitude normalizing unit 93 and a phase adjusting unit 94.

The amplitude normalizing unit 93 performs processing of normalizing the amplitude of the communication signal d(t) to 1 by dividing the communication signal d(t) by the amplitude of the communication signal d(t) generated by the communication signal generating unit 11, and outputting the communication signal whose amplitude is normalized to 1 to the phase adjusting unit 94.

The phase adjusting unit 94 performs processing of generating the interference signal i(t) to be the interference wave of the communication signal d(t) by adjusting the phase of the communication signal output from the amplitude normalizing unit 93, and outputting the interference signal i(t) to the interference excitation distribution calculation processing unit 23.

The excitation distribution calculating unit 91 includes an excitation amplitude distribution setting unit 92, the communication excitation distribution calculating unit 18, and the interference excitation distribution calculating unit 21.

The excitation distribution calculating unit 91 performs processing of calculating each of the excitation distribution W1(t) of the communication beam and the excitation distribution W2(t) of the interference beam of which sums of squares of the excitation amplitude $A_k$ of the interference beam and a product of the amplitude of the communication signal d(t) and the excitation amplitude $B_k$ of the communication beam are the same to each other for each of the element antennas 3-1 to 3-K.

The excitation amplitude distribution setting unit 92 includes a total power setting unit 95, the first excitation amplitude distribution setting unit 16, a second excitation amplitude distribution setting unit 96, and an amplitude adjusting unit 97, and is implemented by, for example, the excitation amplitude distribution setting circuit 43 illustrated in FIG.2.

The excitation amplitude distribution setting unit 92 sets a total power value Q that is a sum of squares of the excitation amplitude $A_k$ of the interference beam and the product of the amplitude of the communication signal d(t) and the excitation amplitude $B_k$ of the communication beam in one element antenna 3-k, as the common set value with respect to the element antennas 3-1 to 3-K.

In addition, the excitation amplitude distribution setting unit 92 performs processing of setting each of the first excitation amplitude distribution A with respect to the element antennas 3-1 to 3-K and a second excitation amplitude distribution C with respect to the element antennas 3-1 to 3-K.

The total power setting unit 95 sets the common set value with respect to the K element antennas 3-1 to 3-K.

That is, the total power setting unit 95 performs processing of setting the total power value Q that is the sum of squares of the excitation amplitude $A_k$ of the interference beam and the product of the amplitude |d(t)| of the communication signal d(t) and the excitation amplitude $B_k$ of the communication beam with respect to one element antenna 3-k.

The second excitation amplitude distribution setting unit 96 performs processing of setting the second excitation amplitude distribution B with respect to the K element antennas 3-1 to 3-K.

The second excitation amplitude distribution setting unit 96 sets, for example, the second excitation amplitude distribution B of which the sum of squares of the excitation amplitude $A_k$ of the interference beam and the product of the amplitude of the communication signal d(t) and the excitation amplitude $B_k$ of the communication beam is the total power value Q set by the total power setting unit 95.

The amplitude adjusting unit 97 performs processing of adjusting the excitation amplitude $B_k$ of the communication beam in the second excitation amplitude distribution B by multiplying the excitation amplitude $B_k$ of the communication beam in the second excitation amplitude distribution B set by the second excitation amplitude distribution setting unit 96 by the amplitude |d(t)| of the communication signal d(t).

The amplitude adjusting unit 97 outputs the second excitation amplitude distribution B after excitation amplitude adjustment to the communication excitation distribution calculation processing unit 20, as the excitation amplitude distribution C.

Next, the operation will be described.

In the third embodiment, an example will be described in which the antenna device transmits a symbol of 16QAM by the array antenna 3 including the K element antennas 3-1 to 3-K.

For example, when a transmission bit sequence in which information to be transmitted is encoded is externally given, the communication signal generating unit 11 generates the communication signal d(t) that is a signal to be communicated, by applying baseband modulation processing of 16QAM to the transmission bit sequence.

The communication signal generating unit 11 outputs the generated communication signal d(t) to the interference signal generating unit 90, the second excitation amplitude distribution setting unit 96, the amplitude adjusting unit 97, and the communication excitation distribution calculation processing unit 20.

In the communication signal d(t), t represents time.

In a case where the communication signal generating unit 11 uses 16QAM as the modulation method and sets an average signal power of all modulation symbol points to 1, the communication signal d(t) on a complex plane is as follows.

In the first quadrant, the communication signal d(t) on the complex plane is one of $(1/\sqrt{10}, 1/\sqrt{10})$, $(3/\sqrt{10}, 1/\sqrt{10})$, $(1/\sqrt{10}, 3/\sqrt{10})$, or $(3/\sqrt{10}, 3/\sqrt{10})$.

In the second quadrant, the communication signal d(t) on the complex plane is one of $(-1/\sqrt{10}, 1/\sqrt{10})$, $(-3/\sqrt{10}, 1/\sqrt{10})$, $(-1/\sqrt{10}, 3/\sqrt{10})$, or $(-3/\sqrt{10}, 3/\sqrt{10})$.

In the third quadrant, the communication signal d(t) on the complex plane is one of $(-1/\sqrt{10}, -1/\sqrt{10})$, $(-3/\sqrt{10}, -1/\sqrt{10})$, $(-1/\sqrt{10}, -3/\sqrt{10})$, or $(-3/\sqrt{10}, -3/\sqrt{10})$.

In the fourth quadrant, the communication signal d(t) on the complex plane is one of $(1/\sqrt{10}, -1/\sqrt{10})$, $(3/\sqrt{10}, -1/\sqrt{10})$, $(1/\sqrt{10}, -3/\sqrt{10})$, or $(3/\sqrt{10}, -3/\sqrt{10})$.

FIG. 19 is a flowchart illustrating operation of the excitation amplitude distribution setting unit 92.

Hereinafter, the operation of the excitation amplitude distribution setting unit 92 will be described with reference to FIG. 19.

The first excitation amplitude distribution setting unit 16 of the excitation amplitude distribution setting unit 92 sets the first excitation amplitude distribution A that increases the gain in the side lobe direction of the difference pattern in the array antenna 3, similarly to the first embodiment (step ST61 in FIG. 19).

The first excitation amplitude distribution setting unit 16 outputs the set first excitation amplitude distribution A to the second excitation amplitude distribution setting unit 96 and the interference excitation distribution calculation processing unit 23.

The total power setting unit 95 sets the total power value Q that is the sum of squares of the excitation amplitude $A_k$ of the interference beam with respect to one element antenna 3-k and the product of the amplitude |d(t)| of the communication signal d(t) and the excitation amplitude $B_k$ of the communication beam with respect to the one element antenna 3-k.

The second excitation amplitude distribution setting unit 96 sets the second excitation amplitude distribution B by using the first excitation amplitude distribution A set by the first excitation amplitude distribution setting unit 16, the communication signal d(t), and the total power value Q set by the total power setting unit 15 (step ST62 in FIG. 19).

That is, the second excitation amplitude distribution setting unit 96 sets the second excitation amplitude distribution B of which the sum of squares of the excitation amplitude $A_k$ of the interference beam and the product of the amplitude |d(t)| of the communication signal d(t) and the excitation amplitude $B_k$ of the communication beam is the total power value Q.

Here, a relationship among the element $A_k$ of the first excitation amplitude distribution A in the element antenna 3-k, the amplitude |d(t)| of the communication signal d(t), the element $B_k$ of the second excitation amplitude distribution B, and the total power value Q is expressed by equation (12) below.

$$(|d(t)| \cdot B_k)^2 + A_k^2 = Q \qquad (1\,2)$$

Thus, the excitation amplitude $B_k$ of the interference beam in the second excitation amplitude distribution B set by the second excitation amplitude distribution setting unit 96 is expressed by equation (13) below.

$$B_k = \frac{\sqrt{Q - A_k^2}}{|d(t)|} \qquad (1\,3)$$

The amplitude adjusting unit 97 adjusts the excitation amplitude $B_k$ of the communication beam in the second excitation amplitude distribution B by multiplying the excitation amplitude $B_k$ of the communication beam in the second excitation amplitude distribution B set by the second excitation amplitude distribution setting unit 96 by the amplitude |d(t)| of the communication signal d(t) (step ST63 in FIG. 19).

The amplitude adjusting unit 97 outputs the second excitation amplitude distribution B after the excitation amplitude adjustment to the communication excitation distribution calculation processing unit 20, as the excitation amplitude distribution C.

Here, the excitation amplitude distribution C is represented by a matrix of K rows and one column. Individual element of the matrix is a positive value, and individual element is denoted as $C_k$. The element $C_k$ is expressed by equation (14) below.

$$C_k = |d(t)| \cdot B_k \qquad (1\,4)$$

As indicated by equation (15) below, the communication excitation distribution calculation processing unit 20 calculates the excitation distribution W1(t) of the communication beam by multiplying the communication signal d(t) generated by the communication signal generating unit 11 by the excitation phase distribution S of the sum pattern and a diagonal matrix of the excitation amplitude distribution C.

$$W1(t) = d(t) \cdot diag(C) \cdot S \qquad (15)$$

In equation (15), diag(C) is a diagonal matrix with individual element $C_k$ in the excitation amplitude distribution C as a diagonal element.

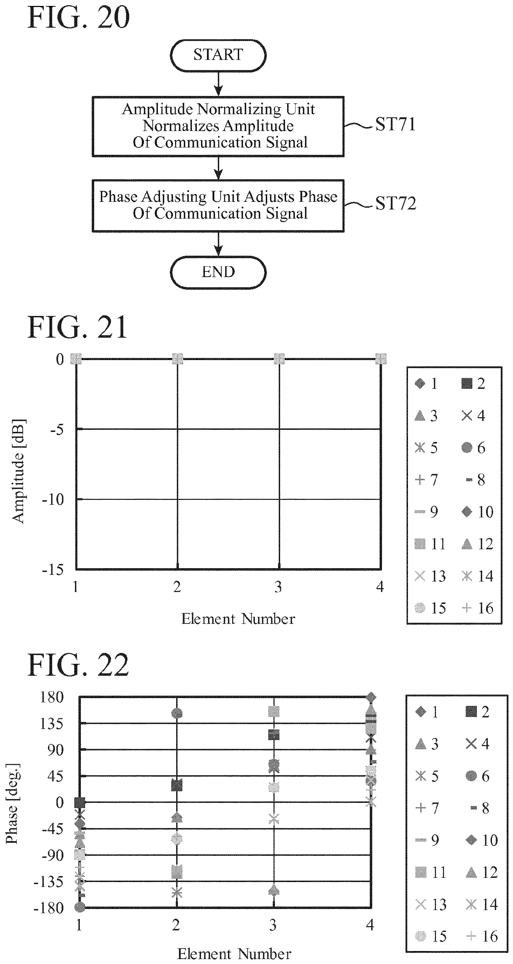

FIG. 20 is a flowchart illustrating operation of the interference signal generating unit 90.

Hereinafter, the operation of the interference signal generating unit 90 will be described with reference to FIG. 20.

Upon receiving the communication signal d(t) from the communication signal generating unit 11, the amplitude normalizing unit 93 of the interference signal generating unit 90 normalizes the amplitude of the communication signal d(t) to 1 by dividing the communication signal d(t) by the amplitude |d(t)| of the communication signal d(t) (step ST71 in FIG. 20).

The amplitude normalizing unit 93 outputs the communication signal whose amplitude is normalized to 1 to the phase adjusting unit 94.

The phase adjusting unit 94 generates the interference signal i(t) by adjusting the phase of the communication signal output from the amplitude normalizing unit 93 (step ST72 in FIG. 20).

Specifically, the phase adjusting unit 94 generates the interference signal i(t) by shifting the phase of the communication signal output from the amplitude normalizing unit 93 by 90 degrees or -90 degrees.

The phase adjusting unit 94 outputs the generated interference signal i(t) to the interference excitation distribution calculation processing unit 23.

The interference signal i(t) generated by the phase adjusting unit 94 is expressed by equation (16) below.

$$i(t) = \frac{d(t)}{|d(t)|} \exp\left(\pm j \frac{\pi}{2}\right) = \pm j \frac{d(t)}{|d(t)|} = \pm j \cdot \exp(j\alpha(t)) \qquad (1\ 6)$$

In equation (16), $\alpha(t)$ is the phase of the communication signal d(t) at the time t.

Assuming that a symbol point on the complex plane of the communication signal d(t) at a certain time t is $(1/\sqrt{10}, 1/\sqrt{10})$, the communication signal d(t) output from the communication signal generating unit 11 is represented as $(\exp(j\pi/4))/\sqrt{5}$.

Assuming that the phase of the communication signal output from the amplitude normalizing unit 93 is shifted by 90 degrees by the phase adjusting unit 94, the interference signal i(t) is represented as $j\exp(j\pi/4)$.

The excitation distribution synthesizing unit 25 synthesizes the excitation distribution W1(t) of the communication beam calculated by the communication excitation distribution calculation processing unit 20 and the excitation distribution W2(t) of the interference beam calculated by the interference excitation distribution calculation processing unit 23, similarly to the first embodiment.

Then, the excitation distribution synthesizing unit 25 calculates the synthesized excitation distribution E(t) by multiplying the synthesized excitation distribution (W1(t) + W2(t)) by the diagonal matrix of the beam scanning phase distribution P and the normalization factor $1/\sqrt{Q}$, similarly to the first embodiment.

When equations (8) and (15) are used, the synthesized excitation distribution E(t) is expressed by equation (17) below.

$$E(t) = \frac{diag(P) \cdot (d(t) \cdot diag(C) \cdot S + i(t) \cdot diag(A) \cdot D)}{\sqrt{Q}} \qquad (1\ 7)$$

When the element $C_k$ of the excitation amplitude distribution C indicated by equation (14), the excitation phase distribution S of the sum pattern indicated by equation (2), the excitation phase distribution D of the difference pattern indicated by equation (5), and the interference signal i(t) indicated by equation (16) are substituted to equation (17), the synthesized excitation distribution E(t) is expressed by equation (18) below. Here, the interference signal i(t) to be substituted to equation (17) is the interference signal i(t) of the positive sign out of the interference signals i(t) represented by a double sign in equation (16).

$$E(t) = \frac{1}{\sqrt{Q}} \cdot diag(P) \cdot \left\{ d(t) \cdot \begin{bmatrix} \frac{\sqrt{Q-A_1^2}}{|d(t)|} & & 0 \\ & \ddots & \\ 0 & & \frac{\sqrt{Q-A_k^2}}{|d(t)|} \end{bmatrix} \cdot \begin{bmatrix} 1 \\ 1 \\ \vdots \\ 1 \end{bmatrix} + j \cdot \exp(j\alpha(t)) \cdot \begin{bmatrix} A_1 & & & & 0 \\ & \ddots & & & \\ & & A_{K/2} & & \\ & & & A_{K/2+1} & \\ & & & & \ddots \\ 0 & & & & A_K \end{bmatrix} \cdot \begin{bmatrix} -1 \\ \vdots \\ -1 \\ 1 \\ \vdots \\ 1 \end{bmatrix} \right\}$$

$$= \frac{1}{\sqrt{Q}} \cdot diag(P) \cdot \left\{ \frac{d(t)}{|d(t)|} \cdot \begin{bmatrix} \sqrt{Q-A_1^2} & & 0 \\ & \ddots & \\ 0 & & \sqrt{Q-A_K^2} \end{bmatrix} \cdot \begin{bmatrix} 1 \\ 1 \\ \vdots \\ 1 \end{bmatrix} + j \cdot \exp(j\alpha(t)) \cdot \begin{bmatrix} A_1 & & & & 0 \\ & \ddots & & & \\ & & A_{K/2} & & \\ & & & A_{K/2+1} & \\ & & & & \ddots \\ 0 & & & & A_K \end{bmatrix} \cdot \begin{bmatrix} -1 \\ \vdots \\ -1 \\ 1 \\ \vdots \\ 1 \end{bmatrix} \right\}$$

$$= \frac{1}{\sqrt{Q}} \cdot diag(P) \cdot \exp(j\alpha(t)) \cdot \begin{bmatrix} \sqrt{Q-A_1^2} - jA_1 \\ \vdots \\ \sqrt{Q-A_{K/2}^2} - jA_{K/2} \\ \sqrt{Q-A_{K/2+1}^2} + jA_{K/2+1} \\ \vdots \\ \sqrt{Q-A_K^2} + jA_K \end{bmatrix} \qquad (1\ 8)$$

When the amplitude of each term of equation (18) is considered, diag(P) is the beam scanning phase and exp(jα(t)) is the phase of the communication signal d(t), so that each has a constant amplitude.

In addition, amplitudes of the elements of the column vector are all constant, $\sqrt{Q}$, as indicated by equation (11).

Thus, excitation amplitudes of the element antennas 3-1 to 3-K in the synthesized excitation distribution E(t) are all the same.

FIG. 21 is an explanatory diagram illustrating an amplitude characteristic of the synthesized excitation distribution E(t) implementing 16QAM, and FIG. 22 is an explanatory diagram illustrating a phase characteristic of the synthesized excitation distribution E(t).

FIGS. 21 and 22 each illustrate an example in which the number of element antennas included in the array antenna 3 is four.

In addition, FIG. 21 illustrates the amplitude characteristic of sixteen types of synthesized excitation distributions E(t), and FIG. 22 illustrates the phase characteristic of the sixteen types of the synthesized excitation distributions E(t).

The amplitude characteristic of the sixteen types of the synthesized excitation distributions E(t) is constant as illustrated in FIG. 21, but the phase characteristic of the synthesized excitation distributions E(t) varies depending on the modulation symbol of the communication signal d(t) as illustrated in FIG. 22.

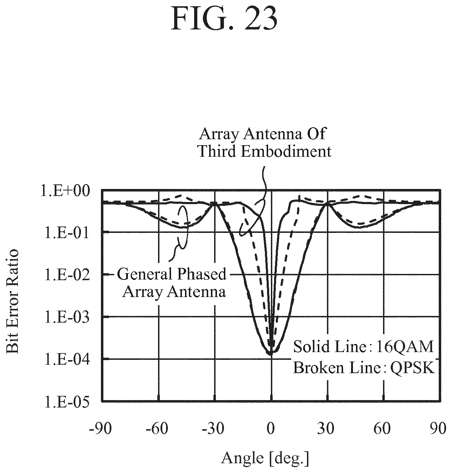

FIG. 23 is an explanatory diagram illustrating an angle characteristic of a bit error rate in a case where the communication direction is 0 degrees.

A general phased array antenna has a wide angular width that enables communication even in the vicinity of the communication direction, and there is no big difference between a bit error rate characteristic by the modulation method of QPSK and a bit error rate characteristic by the modulation method of 16QAM.

In the array antenna 3 of the third embodiment, as illustrated in FIG. 23, a communicable area is more limited than the general phased array antenna, and confidentiality can be implemented. In addition, it is understood that the array antenna 3 of the third embodiment can further limit the communicable area when 16QAM is used as compared with a case where QPSK is used.

As is apparent from the above description, according to the third embodiment, the excitation amplitude can be made constant in the communication signal d(t) even in the case of a modulation method such as QAM whose amplitude varies. Since the excitation amplitude is constant, the antenna device can be implemented without use of expensive amplifiers having wide dynamic ranges, as the amplifiers 33-1 to 33-K.

In addition, according to the third embodiment, since the excitation amplitude is constant and the number of bits per communication symbol can be increased, there is an effect that communication capacity can be increased.

In addition, according to the third embodiment, since multi-level modulation such as 16QAM can be applied, there is an effect that the confidentiality can be improved by narrowing the angular width that can be communicated.

In addition, since the first excitation amplitude distribution A for the interference beam is set and then the second excitation amplitude distribution B for the communication beam is set, an interference beam can be designed that covers the side lobe of the communication beam. As a result, the gain of the interference beam is increased in the side lobe direction of the communication beam, so that there is an effect that the confidentiality of communication can be improved.

Fourth Embodiment.

In the third embodiment, the example has been described in which the first excitation amplitude distribution setting unit 16 sets the first excitation amplitude distribution A and then the second excitation amplitude distribution setting unit 96 sets the second excitation amplitude distribution B.

In this fourth embodiment, an example will be described in which a second excitation amplitude distribution setting unit 103 sets the second excitation amplitude distribution B and then a first excitation amplitude distribution setting unit 105 sets the first excitation amplitude distribution A.

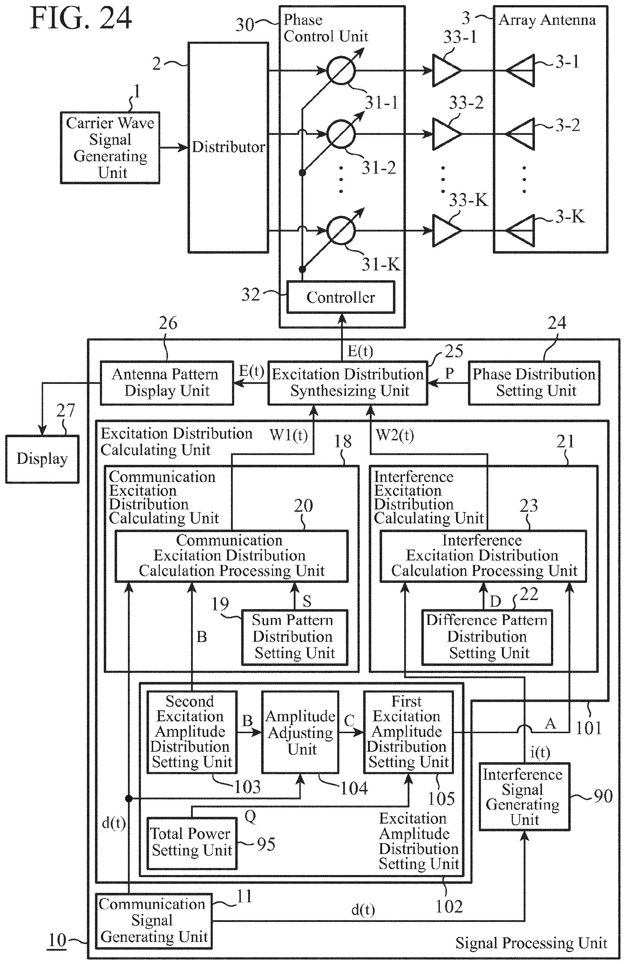

FIG. 24 is a configuration diagram illustrating an antenna device according to the fourth embodiment of the present invention.

In FIG. 24, since the same reference numerals as those in FIGS. 1 and 17 denote the same or corresponding portions, the description thereof will be omitted.

An excitation distribution calculating unit 101 includes an excitation amplitude distribution setting unit 102, the communication excitation distribution calculating unit 18, and the interference excitation distribution calculating unit 21.

The excitation distribution calculating unit 101 performs processing of calculating each of the excitation distribution W1(t) of the communication beam and the excitation distribution W2(t) of the interference beam of which the sums of squares of the excitation amplitude $A_k$ of the interference beam and the product of the amplitude of the communication signal d(t) and the excitation amplitude $B_k$ of the communication beam are the same to each other for each of the element antennas 3-1 to 3-K.

The excitation amplitude distribution setting unit 102 includes the total power setting unit 95, the second excitation amplitude distribution setting unit 103, an amplitude adjusting unit 104, and the first excitation amplitude distribution setting unit 105, and is implemented by, for example, the excitation amplitude distribution setting circuit 43 illustrated in FIG. 2.

The excitation amplitude distribution setting unit 102 sets the total power value Q that is the sum of squares of the excitation amplitude $A_k$ of the interference beam and the product of the amplitude of the communication signal $d(t)$ and the excitation amplitude $B_k$ of the communication beam in one element antenna 3-k, as the common set value with respect to the element antennas 3-1 to 3-K.

In addition, the excitation amplitude distribution setting unit 102 performs processing of setting each of the first excitation amplitude distribution A with respect to the element antennas 3-1 to 3-K and the second excitation amplitude distribution B with respect to the element antennas 3-1 to 3-K.

The second excitation amplitude distribution setting unit 103 performs processing of setting the second excitation amplitude distribution B with respect to the K element antennas 3-1 to 3-K.

The second excitation amplitude distribution setting unit 103 sets, as the second excitation amplitude distribution B, for example, an excitation amplitude distribution of which excitation amplitudes of the communication beams with respect to the element antennas 3-1 and 3-K at the ends are smaller than excitation amplitudes of the communication beams with respect to the element antenna 3-2 to 3-(K - 1) at other than the ends.

The amplitude adjusting unit 104 performs processing of adjusting the excitation amplitude $B_k$ of the communication beam in the second excitation amplitude distribution B by multiplying the excitation amplitude $B_k$ of the communication beam in the second excitation amplitude distribution B set by the second excitation amplitude distribution setting unit 103 by the amplitude $|d(t)|$ of the communication signal $d(t)$.

The amplitude adjusting unit 104 outputs, to the first excitation amplitude distribution setting unit 105, the second excitation amplitude distribution B after the excitation amplitude adjustment as the excitation amplitude distribution C.

The first excitation amplitude distribution setting unit 105 performs processing of setting the first excitation amplitude distribution A with respect to the K element antennas 3-1 to 3-K.

The first excitation amplitude distribution setting unit 105 sets, for example, the first excitation amplitude distribution A of which the sum of squares of the excitation amplitude $A_k$ of the interference beam and the product of the amplitude of the communication signal $d(t)$ and the excitation amplitude $B_k$ of the communication beam is the total power value Q set by the total power setting unit 95.

Next, the operation will be described.

In the fourth embodiment, an example will be described in which the antenna device transmits a symbol of 16QAM by the array antenna 3 including the K element antennas 3-1 to 3-K.

For example, when a transmission bit sequence in which information to be transmitted is encoded is externally given, the communication signal generating unit 11 generates the communication signal $d(t)$, by applying baseband modulation processing of 16QAM to the transmission bit sequence, similarly to the third embodiment.

The communication signal generating unit 11 outputs the generated communication signal $d(t)$ to the interference signal generating unit 90, the amplitude adjusting unit 104, and the communication excitation distribution calculation processing unit 20.

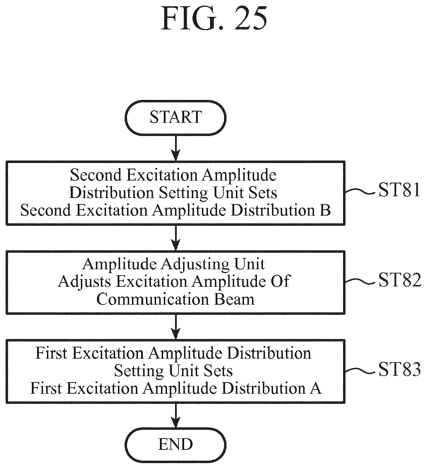

FIG. 25 is a flowchart illustrating operation of the excitation amplitude distribution setting unit 102.

Hereinafter, the operation of the excitation amplitude distribution setting unit 102 will be described with reference to FIG. 25.

The second excitation amplitude distribution setting unit 103 of the excitation amplitude distribution setting unit 102 sets the second excitation amplitude distribution B with respect to the K element antennas 3-1 to 3-K (step ST81 in FIG. 25).

Specifically, the second excitation amplitude distribution setting unit 103 sets, as the second excitation amplitude distribution B, for example, the excitation amplitude distribution of which the excitation amplitudes of the communication beams with respect to the element antennas 3-1 and 3-K at the ends are smaller than the excitation amplitudes of the communication beams with respect to the element antenna 3-2 to 3-(K - 1) at other than the ends, as illustrated in FIG. 9.

The second excitation amplitude distribution setting unit 103 outputs the set second excitation amplitude distribution B to the amplitude adjusting unit 104 and the communication excitation distribution calculation processing unit 20.

The amplitude adjusting unit 104 adjusts the excitation amplitude $B_k$ of the communication beam in the second excitation amplitude distribution B by multiplying the excitation amplitude $B_k$ of the communication beam in the second excitation amplitude distribution B set by the second excitation amplitude distribution setting unit 103 by the amplitude $|d(t)|$ of the communication signal $d(t)$ (step ST82 in FIG. 25).

The amplitude adjusting unit 104 outputs, to the first excitation amplitude distribution setting unit 105, the second excitation amplitude distribution B after the excitation amplitude adjustment as the excitation amplitude distribution C.

Here, the element $C_k$ of the excitation amplitude distribution C is expressed by equation (19) below.

$$C_k = |d(t)| \cdot B_k \qquad (1\ 9)$$

The total power setting unit 95 sets the total power value Q that is the sum of squares of the excitation amplitude $A_k$ of the interference beam with respect to the element antenna 3-k, and a product of the amplitude $|d(t)|$ of the communication signal d(t) and the excitation amplitude $B_k$ of the communication beam with respect to the element antenna 3-k, similarly to the third embodiment.

The first excitation amplitude distribution setting unit 105 sets the first excitation amplitude distribution A by using the excitation amplitude distribution C output from the amplitude adjusting unit 104 and the total power value Q set by the total power setting unit 15 (step ST83 in FIG. 25).

That is, the first excitation amplitude distribution setting unit 105 calculates the excitation amplitude $A_k$ of the interference beam with respect to the element antenna 3-k by substituting the element $C_k$ of the excitation amplitude distribution C and the total power value Q to equation (20) below.

$$A_k = \sqrt{Q - C_k^2} \qquad (2\ 0)$$

As indicated by equation (21) below, the communication excitation distribution calculation processing unit 20 calculates the excitation distribution W1(t) of the communication beam by multiplying the communication signal d(t) generated by the communication signal generating unit 11 by the excitation phase distribution S of the sum pattern and the diagonal matrix of the excitation amplitude distribution B.

$$W1(t) = d(t) \bullet diag(B) \bullet S \qquad (21)$$

The excitation distribution synthesizing unit 25 synthesizes the excitation distribution W1(t) of the communication beam calculated by the communication excitation distribution calculation processing unit 20 and the excitation distribution W2(t) of the interference beam calculated by the interference excitation distribution calculation processing unit 23, similarly to the first embodiment.

Then, the excitation distribution synthesizing unit 25 calculates the synthesized excitation distribution E(t) by multiplying the synthesized excitation distribution (W1(t) + W2(t)) by the diagonal matrix of the beam scanning phase distribution P and the normalization factor $1/\sqrt{Q}$, similarly to the first embodiment.

When equations (8) and (21) are used, the synthesized excitation distribution E(t) is expressed by equation (22) below.

$$E(t) = \frac{diag(P) \cdot (d(t) \cdot diag(B) \cdot S + i(t) \cdot diag(A) \cdot D)}{\sqrt{Q}} \qquad (2\ 2)$$

When the element $A_k$ of the first excitation amplitude distribution A indicated by equation (20), the excitation phase distribution S of the sum pattern indicated by equation (2), the excitation phase distribution D of the difference pattern indicated by equation (5), and the interference signal i(t) indicated by equation (16) are substituted to equation (22), the synthesized excitation distribution E(t) is expressed by equation (23) below. Here, the interference signal i(t) to be substituted to equation (22) is the interference signal i(t) of the positive sign out of the interference signal i(t) represented by the double sign in equation (16).

$$E(t) = \frac{1}{\sqrt{Q}} \cdot diag(P) \cdot \left\{ d(t) \cdot \begin{bmatrix} B_1 & & & & 0 \\ & \ddots & & & \\ & & B_{K/2} & & \\ & & & B_{K/2+1} & \\ & & & & \ddots \\ 0 & & & & B_K \end{bmatrix} \cdot \begin{bmatrix} 1 \\ 1 \\ \vdots \\ 1 \end{bmatrix} + j \cdot \exp(j\alpha(t)) \cdot \begin{bmatrix} \sqrt{Q - |d(t)|^2 B_1^2} & & 0 \\ & \ddots & \\ 0 & & \sqrt{Q - |d(t)|^2 B_k^2} \end{bmatrix} \cdot \begin{bmatrix} -1 \\ \vdots \\ -1 \\ 1 \\ \vdots \\ 1 \end{bmatrix} \right\}$$

$$= \frac{1}{\sqrt{Q}} \cdot diag(P) \cdot \left\{ |d(t)| \exp(j\alpha(t)) \cdot \begin{bmatrix} B_1 & & & & 0 \\ & \ddots & & & \\ & & B_{K/2} & & \\ & & & B_{K/2+1} & \\ & & & & \ddots \\ 0 & & & & B_K \end{bmatrix} \cdot \begin{bmatrix} 1 \\ 1 \\ \vdots \\ 1 \end{bmatrix} + j \cdot \exp(j\alpha(t)) \cdot \begin{bmatrix} \sqrt{Q - |d(t)|^2 B_1^2} & & 0 \\ & \ddots & \\ 0 & & \sqrt{Q - |d(t)|^2 B_k^2} \end{bmatrix} \right.$$

$$\left. \cdot \begin{bmatrix} -1 \\ \vdots \\ -1 \\ 1 \\ \vdots \\ 1 \end{bmatrix} \right\}$$

$$= \frac{1}{\sqrt{Q}} \cdot diag(P) \cdot \exp(j\alpha(t)) \cdot \begin{bmatrix} |d(t)|B_1 - j\sqrt{Q - |d(t)|^2 B_1^2} \\ \vdots \\ |d(t)|B_{K/2} - j\sqrt{Q - |d(t)|^2 B_{K/2}^2} \\ |d(t)|B_{K/2+1} + j\sqrt{Q - |d(t)|^2 B_{K/2+1}^2} \\ \vdots \\ |d(t)|B_k + j\sqrt{Q - |d(t)|^2 B_k^2} \end{bmatrix} \qquad (23)$$

When the amplitude of each term of equation (23) is considered, $diag(P)$ is the beam scanning phase and $\exp(j\alpha(t))$ is the phase of the communication signal $d(t)$, so that each has a constant amplitude.

In addition, amplitudes of the elements of the column vector are all constant, $\sqrt{Q}$, as indicated by equation (11).

Thus, excitation amplitudes of the element antennas 3-1 to 3-K in the synthesized excitation distribution $E(t)$ are all the same.

As is apparent from the above description, according to the fourth embodiment, the excitation amplitude can be made constant in the communication signal $d(t)$ even in the case of a modulation method such as QAM whose amplitude varies. Since the excitation amplitude is constant, the antenna device can be implemented without use of expensive amplifiers having wide dynamic ranges, as the amplifiers 33-1 to 33-K.

In addition, according to the fourth embodiment, since the excitation amplitude is constant and the number of bits per communication symbol can be increased, there is an effect that communication capacity can be increased.

In addition, according to the fourth embodiment, since multi-level modulation such as 16QAM can be applied, there is an effect that the confidentiality can be improved by narrowing the angular width that can be communicated.

In addition, since the second excitation amplitude distribution B for the communication beam is set and then the first excitation amplitude distribution A for the interference beam is set, an existing excitation amplitude distribution can be used such as a Taylor distribution, so that there is an effect that the confidentiality of communication can be improved by reducing the side lobe of the communication beam.

In the fourth embodiment, the example has been described in which the second excitation amplitude distribution setting unit 103 sets the second excitation amplitude distribution B of which the excitation amplitudes $B_1$ and $B_K$ of the communication beam with respect to the element antennas 3-1 and 3-K at the ends are smaller than the excitation amplitudes $B_2$ to $B_{K-1}$ of the communication beam with respect to the element antennas 3-2 to 3-(K - 1) at other than the ends.

In the example, the first excitation amplitude distribution A set by the first excitation amplitude distribution setting unit 105 is an excitation amplitude distribution of which the excitation amplitudes $A_1$ and $A_K$ of the interference beam with respect to the element antennas 3-1 and 3-K at the ends are larger than the excitation amplitudes $A_2$ to $A_{K-1}$ of the interference beam with respect to the element antennas 3-2 to 3-(K - 1) at other than the ends.

The fourth embodiment is not limited to the example.

For example, the second excitation amplitude distribution setting unit 103 may set the second excitation amplitude distribution B of which the excitation amplitudes $B_1$ and $B_K$ of the communication beam with respect to the element antennas 3-1 and 3-K at the ends are larger than the excitation amplitudes $B_2$ to $B_{K-1}$ of the communication beam with respect to the element antennas 3-2 to 3-(K - 1) at other than the ends, as illustrated in FIG. 9.

In the example, the first excitation amplitude distribution A set by the first excitation amplitude distribution setting unit 105 is an excitation amplitude distribution of which the excitation amplitudes $A_1$ and $A_K$ of the interference beam with respect to the element antennas 3-1 and 3-K at the ends are smaller than the excitation amplitudes $A_2$ to $A_{K-1}$ of the interference beam with respect to the element antennas 3-2 to 3-(K - 1) at other than the ends.

Fifth Embodiment.

In the third embodiment, the antenna device has been described including the interference signal generating unit 90 and the excitation distribution calculating unit 91 instead of the interference signal generating unit 12 and the excitation distribution calculating unit 13 of the antenna device illustrated in FIG. 1 in the first embodiment.

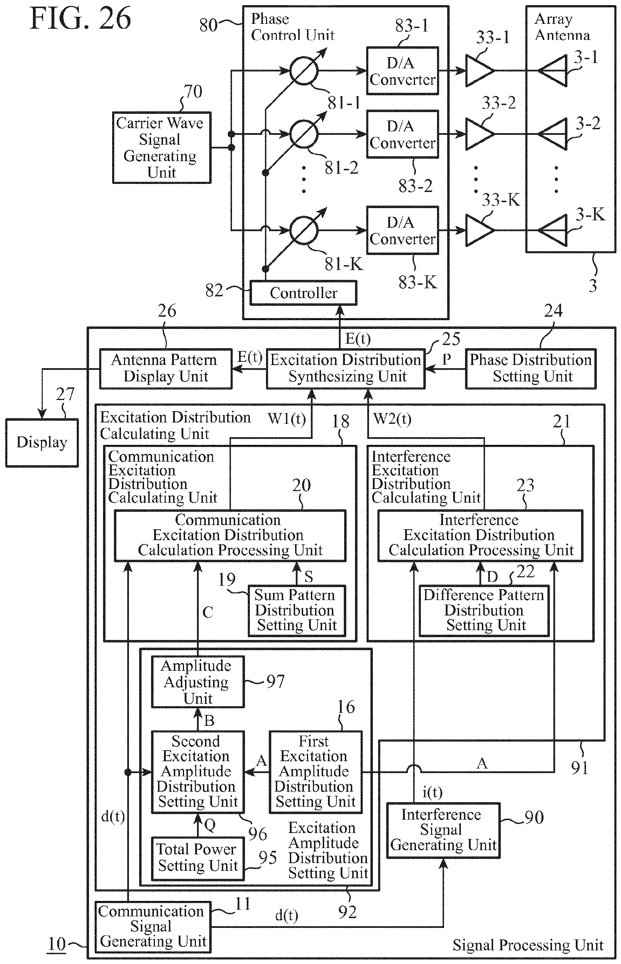

The antenna device may include the interference signal generating unit 90 and the excitation distribution calculating unit 91 instead of the interference signal generating unit 12 and the excitation distribution calculating unit 13 of the antenna device illustrated in FIG. 15 in the second embodiment, as illustrated in FIG. 26. FIG. 26 is a configuration diagram illustrating an antenna device according to a fifth embodiment of the present invention.

The antenna device illustrated in FIG. 26 also obtains an effect similar to that of the antenna device illustrated in FIG. 17 in the third embodiment.

Note that, in the fifth embodiment, the digital signal processors 81-1 to 81-K adjust the phases of the carrier wave signals in accordance with the adjustment amounts of the phases indicated by the control signals output from the controller 82 with digital signal processing, similarly to the second embodiment, so that the formation accuracy of the antenna pattern can be improved as compared with the third embodiment.

Sixth Embodiment.

In the fourth embodiment, the antenna device has been described including the interference signal generating unit 90 and the excitation distribution calculating unit 101 instead of the interference signal generating unit 12 and the excitation distribution calculating unit 13 of the antenna device illustrated in FIG. 1 in the first embodiment.

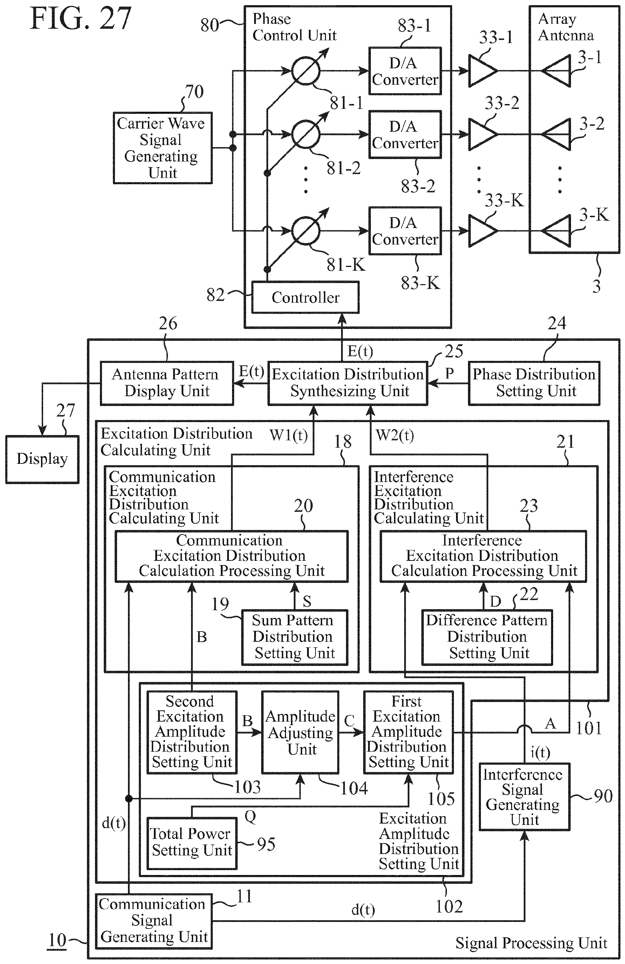

The antenna device may include the interference signal generating unit 90 and the excitation distribution calculating unit 101 instead of the interference signal generating unit 12 and the excitation distribution calculating unit 13 of the antenna device illustrated in FIG. 15 in the second embodiment, as illustrated in FIG. 27. FIG. 27 is a configuration diagram illustrating an antenna device according to a sixth embodiment of the present invention.

The antenna device illustrated in FIG. 27 also obtains an effect similar to that of the antenna device illustrated in FIG. 24 in the fourth embodiment.

Note that, in the sixth embodiment, the digital signal processors 81-1 to 81-K adjust the phases of the carrier wave signals in accordance with the adjustment amounts of the phases indicated by the control signals output from the controller 82 with digital signal processing, similarly to the second embodiment, so that the formation accuracy of the antenna pattern can be improved as compared with the fourth embodiment.

Seventh Embodiment.

In the antenna devices of the first to sixth embodiments, a linear array antenna is assumed in which the element antennas 3-1 to 3-K of the array antenna 3 are arranged linearly.

However, the array antenna 3 is not limited to the linear array antenna, and may be, for example, a planar array antenna in which the element antennas 3-1 to 3-K are two-dimensionally arranged on the same plane. In addition, the array antenna 3 may be a conformal array antenna or the like in which the element antennas 3-1 to 3-K are arranged along a curved surface.

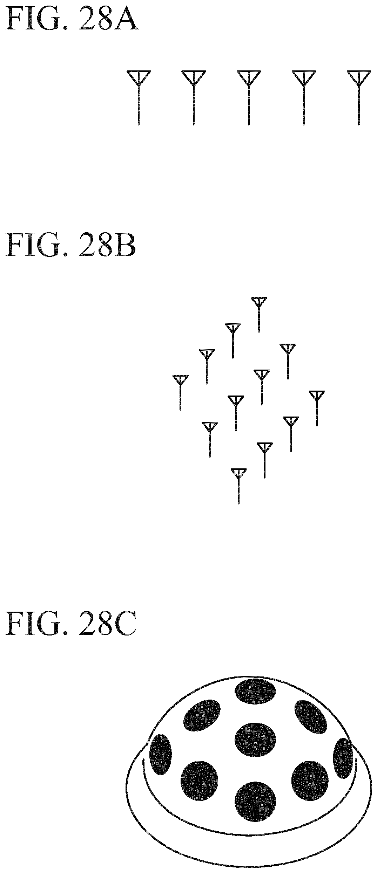

FIG. 28 is an explanatory diagram illustrating an example of the array antenna 3.

FIG. 28A illustrates an example of the linear array antenna, FIG. 28B illustrates an example of the planar array antenna, and FIG. 28C illustrates an example of the conformal array antenna.

While the invention is defined by the claims, note that within the scope of the claims, free combination of optional features of each embodiment, an optional modification of an optional component of each embodiment, or omission of an arbitrary component in each embodiment is possible.

INDUSTRIAL APPLICABILITY

The present invention is suitable for an antenna device and an antenna excitation method for respectively controlling phases of carrier wave signals to be given to a plurality of element antennas included in an array antenna.

REFERENCE SIGNS LIST

1: Carrier wave signal generating unit, 2: Distributor, 3: Array antenna, 3-1 to 3-K: Element antenna, 10: Signal processing unit, 11: Communication signal generating unit, 12: Interference signal generating unit, 13: Excitation distribution calculating unit, 14: Excitation amplitude distribution setting unit, 15: Total power setting unit, 16: First excitation amplitude distribution setting unit, 17: Second excitation amplitude distribution setting unit, 18: Communication excitation distribution calculating unit, 19: Sum pattern distribution setting unit, 20: Communication excitation distribution calculation processing unit, 21: Interference excitation distribution calculating unit, 22: Difference pattern distribution setting unit, 23: Interference excitation distribution calculation processing unit, 24: Phase distribution setting unit, 25: Excitation distribution synthesizing unit, 26: Antenna pattern display unit, 27: Display, 30: Phase control unit, 31-1 to 31-K: Phase adjuster, 32: Controller, 33-1 to 33-K: Amplifier, 41: Communication signal generating circuit, 42: Interference signal generating circuit, 43: Excitation amplitude distribution setting circuit, 44: Communication excitation distribution calculating circuit, 45: Interference excitation distribution calculating circuit, 46: Phase distribution setting circuit, 47: Excitation distribution synthesizing circuit, 48: Display circuit, 60: Processor, 61: Memory, 62: Output interface device, 63: Display interface device, 70: Carrier wave signal generating unit, 80: Phase control unit, 81-1 to 81-K: Digital signal processor, 82: Controller, 83-1 to 83-K: D/A converter, 90: Interference signal generating unit, 91: Excitation distribution calculating unit, 92: Excitation amplitude distribution setting unit, 93: Amplitude normalizing unit, 94: Phase adjusting unit, 95: Total power setting unit, 96: Second excitation amplitude distribution setting unit, 97: Amplitude adjusting unit, 101: Excitation distribution calculating unit, 102: Excitation amplitude distribution setting unit, 103: Second excitation amplitude distribution setting unit, 104: Amplitude adjusting unit, and 105: First excitation amplitude distribution setting unit.

**Claims**

1. An antenna device comprising:

    an array antenna including a plurality of element antennas (3-1 to 3-K) for radiating carrier wave signals;
    a communication signal generating unit (11) for generating a communication signal that is a signal to be communicated;
    an interference signal generating unit (12; 90) for generating an interference signal to be an interference wave of the communication signal by adjusting a phase of the communication signal generated by the communication signal generating unit;
    an excitation distribution calculating unit (13; 91; 101) for calculating each of an excitation distribution of a communication beam, which is a radio wave for transmitting the communication signal, and an excitation distribution of an interference beam, which is a radio wave for transmitting the interference signal, wherein a sum of a square of an excitation amplitude of the communication beam and a square of an excitation amplitude of the interference beam is the same for each of the plurality of element antennas (3-1 to 3-K);
    an excitation distribution synthesizing unit (25) for synthesizing the excitation distribution of the communication beam and the excitation distribution of the interference beam each calculated by the excitation distribution calculating unit (13); and
    a phase control unit (30; 80) for respectively controlling phases of the carrier wave signals to be given to the plurality of element antennas (3-1 to 3-K) in accordance with an excitation distribution after synthesis by the excitation distribution synthesizing unit (25).

2. The antenna device according to claim 1, wherein
    the excitation distribution calculating unit (13) includes:

    an excitation amplitude distribution setting unit (14) for setting a total power value that is a sum of squares of an excitation amplitude of the communication beam and an excitation amplitude of the interference beam in one element antenna as a common set value with respect to the plurality of element antennas (3-1 to 3-K) included in the array antenna, and setting each of a first excitation amplitude distribution with respect to the plurality of element antennas (3-1 to 3-K) and a second excitation amplitude distribution with respect to the plurality of element antennas (3-1 to 3-K);
    a communication excitation distribution calculating unit (18) for setting an excitation phase distribution of a sum pattern in the array antenna, and calculating the excitation distribution of the communication beam by using the excitation phase distribution of the sum pattern, the communication signal, and the second excitation amplitude distribution; and
    an interference excitation distribution calculating unit (21) for setting an excitation phase distribution of a difference pattern in the array antenna as an excitation phase distribution forming a zero point of an antenna pattern in a communication direction of the communication signal, and calculating the excitation distribution of the interference beam by using the excitation phase distribution of the difference pattern, the interference signal, and the first excitation amplitude distribution, and

the excitation amplitude distribution setting unit sets each of the first excitation amplitude distribution and the second excitation amplitude distribution, wherein a sum of squares of an excitation amplitude with respect to one element antenna among the plurality of element antennas (3-1 to 3-K) in the first excitation amplitude distribution and an excitation amplitude with respect to the one element antenna in the second excitation amplitude distribution is the total power value.

3. The antenna device according to claim 1, further comprising:

a carrier wave signal generating unit (1) for generating a carrier wave signal; and
a distributor (2) for distributing the carrier wave signal generated by the carrier wave signal generating unit, wherein
the phase control unit (30) includes:

a plurality of phase adjusters (31-1 to 31-K) each adjusting a phase of one carrier wave signal among a plurality of the carrier wave signals distributed by the distributor and outputting a carrier wave signal after phase adjustment to one element antenna among the plurality of element antennas; and
a controller (32) for respectively controlling adjustment amounts of the phases in the plurality of phase adjusters in accordance with the excitation distribution after the synthesis by the excitation distribution synthesizing unit.

4. The antenna device according to claim 1, further comprising
a carrier wave signal generating unit (70) for generating a carrier wave signal that is a digital signal, wherein
the phase control unit (80) includes:

a plurality of digital signal processors (81-1 to 81-K) each adjusting a phase of the carrier wave signal generated by the carrier wave signal generating unit;
a plurality of digital/analog converters (83-1 to 83-K) each converting a carrier wave signal whose phase has been adjusted by one digital signal processor among the plurality of digital signal processors into an analog signal and outputting the analog signal to one element antenna among the plurality of element antennas; and
a controller (82) for respectively controlling adjustment amounts of the phases in the plurality of digital signal processors in accordance with the excitation distribution after the synthesis by the excitation distribution synthesizing unit.

5. The antenna device according to claim 1, further comprising
a phase distribution setting unit (24) for setting a beam scanning phase distribution that defines a communication direction of the communication signal, wherein
the excitation distribution synthesizing unit (25) synthesizes the excitation distribution of the communication beam and the excitation distribution of the interference beam calculated by the excitation distribution calculating unit, multiplies a synthesized excitation distribution by the beam scanning phase distribution set by the phase distribution setting unit, and outputs an excitation distribution obtained by multiplication by the beam scanning phase distribution as the excitation distribution after the synthesis to the phase control unit.

6. The antenna device according to claim 1, wherein the interference signal generating unit (12) generates the interference signal by shifting the phase of the communication signal by 90 degrees or -90 degrees.

7. The antenna device according to claim 6, wherein when a first phase difference is a phase difference between the interference signal and the communication signal when the phase of the communication signal exists in a first quadrant, a second phase difference is a phase difference between the interference signal and the communication signal when the phase of the communication signal exists in a second quadrant, a third phase difference is a phase difference between the interference signal and the communication signal when the phase of the communication signal exists in a third quadrant, and a fourth phase difference is a phase difference between the interference signal and the communication signal when the phase of the communication signal exists in a fourth quadrant, the interference signal generating unit generates the interference signal in which the first phase difference and the third phase difference are phase differences respectively having different signs, and generates the interference signal in which the second phase difference and the fourth phase difference are phase differences respectively having different signs.

8. The antenna device according to claim 2, wherein the excitation amplitude distribution setting unit (14) sets, as the first excitation amplitude distribution, an excitation amplitude distribution of which an excitation amplitude of the interference beam with respect to an element antenna at ends among the plurality of element antennas is smaller than an excitation amplitude of the interference beam with respect to an element antenna at other than the ends.

9. The antenna device according to claim 2, wherein the excitation amplitude distribution setting unit sets, as the second excitation amplitude distribution, an excitation amplitude distribution of which an excitation amplitude of the communication beam with respect to an element antenna at ends among the plurality of element antennas is smaller than an excitation amplitude of the communication beam with respect to an element antenna at other than the ends.

10. The antenna device according to claim 1, wherein the array antenna is a linear array antenna, a planar array antenna, or a conformal array antenna.

11. The antenna device according to claim 1, wherein
the excitation distribution calculating unit (91; 101) includes:

an excitation amplitude distribution setting unit (92; 102) for setting a total power value that is a sum of squares of a product of an amplitude of the communication signal and an excitation amplitude of the communication beam in one element antenna and an excitation amplitude of the interference beam, as a common set value with respect to the plurality of element antennas included in the array antenna, and setting each of a first excitation amplitude distribution with respect to the plurality of element antennas and a second excitation amplitude distribution with respect to the plurality of element antennas;
a communication excitation distribution calculating unit for setting an excitation phase distribution of a sum pattern in the array antenna, and calculating the excitation distribution of the communication beam by using the excitation phase distribution of the sum pattern, the communication signal, and the second excitation amplitude distribution; and
an interference excitation distribution calculating unit for setting an excitation phase distribution of a difference pattern in the array antenna as an excitation phase distribution forming a zero point of an antenna pattern in a communication direction of the communication signal, and calculating the excitation distribution of the interference beam by using the excitation phase distribution of the difference pattern, the interference signal, and the first excitation amplitude distribution, and
the excitation amplitude distribution setting unit sets each of the first excitation amplitude distribution and the second excitation amplitude distribution, wherein a sum of squares of a product of the amplitude of the communication signal and an excitation amplitude with respect to the one element antenna among the plurality of element antennas in the second excitation amplitude distribution and an excitation amplitude with respect to one element antenna in the first excitation amplitude distribution is the total power value.

12. The antenna device according to claim 1, wherein the interference signal generating unit (90) divides the communication signal by an amplitude of the communication signal, and generates the interference signal by shifting a phase of a communication signal obtained by division by the amplitude by 90 degrees or -90 degrees.

13. The antenna device according to claim 11, wherein the excitation amplitude distribution setting unit (92; 102) sets, as the first excitation amplitude distribution, an excitation amplitude distribution of which an excitation amplitude of the interference beam with respect to an element antenna at ends among the plurality of element antennas is smaller than an excitation amplitude of the interference beam with respect to an element antenna at other than the ends.

14. The antenna device according to claim 11, wherein the excitation amplitude distribution setting unit (92; 102) sets, as the second excitation amplitude distribution, an excitation amplitude distribution of which an excitation amplitude of the communication beam with respect to an element antenna at ends among the plurality of element antennas is smaller than an excitation amplitude of the communication beam with respect to an element antenna at other than the ends.

15. An antenna excitation method comprising:

generating a communication signal that is a signal to be communicated, by a communication signal generating unit;
generating an interference signal to be an interference wave of the communication signal by adjusting a phase of the communication signal generated by the communication signal generating unit, by an interference signal generating unit;

calculating each of an excitation distribution of a communication beam, which is a radio wave for transmitting the communication signal, and an excitation distribution of an interference beam, which is a radio wave for transmitting the interference signal, wherein a sum of a square of an excitation amplitude of the communication beam and a square of an excitation amplitude of the interference beam is the same for each of plurality of element antennas for radiating carrier wave signals, by an excitation distribution calculating unit;

synthesizing the excitation distribution of the communication beam and the excitation distribution of the interference beam each calculated by the excitation distribution calculating unit, by an excitation distribution synthesizing unit; and

respectively controlling phases of the carrier wave signals to be given to the plurality of element antennas in accordance with an excitation distribution after synthesis by the excitation distribution synthesizing unit, by a phase control unit.

## Patentansprüche

1. Antenneneinrichtung, umfassend:

eine Gruppenantenne, aufweisend eine Vielzahl von Elementantennen (3-1 bis 3-K) zum Abstrahlen von Trägerwellensignalen;

eine Kommunikationssignal-Erzeugungseinheit (11) zum Erzeugen eines Kommunikationssignals, das ein zu kommunizierendes Signal ist;

eine Interferenzsignal-Erzeugungseinheit (12; 90) zum Erzeugen eines Interferenzsignals, um eine Interferenzwelle des Kommunikationssignals zu sein durch Anpassen einer Phase des durch die Kommunikationssignal-Erzeugungseinheit erzeugten Kommunikationssignals;

eine Anregungsverteilung-Berechnungseinheit (13; 91; 101) zum Berechnen jeweils einer Anregungsverteilung eines Kommunikationsstrahls, der eine Funkwelle zum Übertragen des Kommunikationssignals ist, und einer Anregungsverteilung eines Interferenzstrahls, der eine Funkwelle zum Übertragen des Interferenzsignals ist, wobei eine Summe aus einem Quadrat einer Anregungsamplitude des Kommunikationsstrahls und einem Quadrat einer Anregungsamplitude des Interferenzstrahls für jede der Vielzahl von Elementantennen (3-1 bis 3-K) gleich ist;

eine Anregungsverteilung-Synthethisierungseinheit (25) zum Synthetisieren der Anregungsverteilung des Kommunikationsstrahls und der Anregungsverteilung des Interferenzstrahls, die jeweils durch die Anregungsverteilung-Berechnungseinheit (13) berechnet werden; und

eine Phasensteuerungseinheit (30; 80) zum jeweiligen Steuern der Phasen der Trägerwellensignale, die an die Vielzahl von Elementantennen (3-1 bis 3-K) gemäß einer Anregungsverteilung nach Synthese durch die Anregungsverteilung-Synthetisierungseinheit (25) auszugeben sind.

2. Antenneneinrichtung nach Anspruch 1, wobei die Anregungsverteilung-Berechnungseinheit (13) aufweist:

eine Anregungsamplitudenverteilung-Einstellungseinheit (14) zum Einstellen eines Gesamtleistungswertes, der eine Summe aus Quadraten einer Anregungsamplitude des Kommunikationsstrahls und einer Anregungsamplitude des Interferenzstrahls in einer Elementantenne ist, als einen gemeinsamen eingestellten Wert in Bezug auf die Vielzahl von Elementantennen (3-1 bis 3-K), die in der Gruppenantenne enthalten sind, und Einstellen jeweils einer ersten Anregungsamplitudenverteilung in Bezug auf die Vielzahl von Elementantennen (3-1 bis 3-K) und einer zweiten Anregungsamplitudenverteilung in Bezug auf die Vielzahl von Elementantennen (3-1 bis 3-K);

eine Kommunikationsanregungsverteilung-Berechnungseinheit (18) zum Einstellen einer Anregungsphasenverteilung eines Summenmusters in der Gruppenantenne und Berechnen der Anregungsverteilung des Kommunikationsstrahls unter Verwendung der Anregungsphasenverteilung des Summenmusters, des Kommunikationssignals und der zweiten Anregungsamplitudenverteilung; und

eine Interferenzanregungsverteilung-Berechnungseinheit (21) zum Einstellen einer Anregungsphasenverteilung eines Differenzmusters in der Gruppenantenne als eine Anregungsphasenverteilung, bildend einen Nullpunkt eines Antennenmusters in einer Kommunikationsrichtung des Kommunikationssignals, und Berechnen der Anregungsverteilung des Interferenzstrahls unter Verwendung der Anregungsphasenverteilung des Differenzmusters, des Interferenzsignals und der ersten Anregungsamplitudenverteilung, und

die Anregungsamplitudenverteilung-Einstellungseinheit jeweils die erste Anregungsamplitudenverteilung und die zweite Anregungsamplitudenverteilung einstellt, wobei eine Summe aus Quadraten einer Anregungsamplitude in Bezug auf eine Elementantenne unter der Vielzahl von Elementantennen (3-1 bis 3-K) in der ersten Anregungsamplitudenverteilung und einer Anregungsamplitude in Bezug auf die eine Elementantenne in der zweiten Anregungsamplitudenverteilung der Gesamtleistungswert ist.

3. Antenneneinrichtung nach Anspruch 1, ferner umfassend:

eine Trägerwellensignal-Erzeugungseinheit (1) zum Erzeugen eines Trägerwellensignals; und
einen Verteiler (2) zum Verteilen des durch die Trägerwellensignal-Erzeugungseinheit erzeugten Trägerwellensignals, wobei
die Phasensteuerungseinheit (30) aufweist:

eine Vielzahl von Phasenanpassern (31-1 bis 31-K), jeweils anpassend eine Phase eines Trägerwellensignals unter einer Vielzahl der durch den Verteiler verteilten Trägerwellensignale und ausgebend ein Trägerwellensignal nach Phasenanpassung an eine Elementantenne unter der Vielzahl von Elementantennen; und
eine Steuerungseinheit (32) zum jeweiligen Steuern von Anpassungsbeträgen der Phasen in der Vielzahl von Phasenanpassern gemäß der Anregungsverteilung nach der Synthese durch die Anregungsverteilung-Synthetisierungseinheit.

4. Antenneneinrichtung nach Anspruch 1, ferner umfassend:

eine Trägerwellensignal-Erzeugungseinheit (70) zum Erzeugen eines Trägerwellensignals, das ein digitales Signal ist, wobei
die Phasensteuerungseinheit (80) aufweist:

eine Vielzahl von Digitalsignal-Prozessoren (81-1 bis 81-K), jeweils anpassend eine Phase des durch die Trägerwellensignal-Erzeugungseinheit erzeugten Trägerwellensignals;
eine Vielzahl von Digital/Analog-Wandlern (83-1 bis 83-K), jeweils umwandelnd ein Trägerwellensignal, dessen Phase durch einen Digitalsignal-Prozessor aus der Vielzahl von Digitalsignal-Prozessoren in ein Analogsignal angepasst wurde, und ausgebend das Analogsignal an eine Elementantenne aus der Vielzahl von Elementantennen; und
eine Steuerungseinheit (82) zum jeweiligen Steuern von Anpassungsbeträgen der Phasen in der Vielzahl von Digitalsignal-Prozessoren gemäß der Anregungsverteilung nach der Synthese durch die Anregungsverteilung-Synthetisierungseinheit.

5. Antenneneinrichtung nach Anspruch 1, ferner umfassend:

eine Phasenverteilung-Einstellungseinheit (24) zum Einstellen einer Strahlabtastphasenverteilung, die eine Kommunikationsrichtung des Kommunikationssignals definiert, wobei
die Anregungsverteilung-Synthetisierungseinheit (25) die durch die Anregungsverteilung-Berechnungseinheit berechnete Anregungsverteilung des Kommunikationsstrahls und Anregungsverteilung des Interferenzstrahls synthetisiert, eine synthetisierte Anregungsverteilung mit der durch die Phasenverteilung-Einstellungseinheit eingestellten Strahlabtastphasenverteilung multipliziert und eine durch Multiplikation mit der Strahlabtastphasenverteilung erhaltene Anregungsverteilung als die Anregungsverteilung nach der Synthese an die Phasensteuerungseinheit ausgibt.

6. Antenneneinrichtung nach Anspruch 1, wobei die Interferenzsignal-Erzeugungseinheit (12) das Kommunikationssignal durch Verschieben der Phase des Kommunikationssignals um 90 Grad oder -90 Grad erzeugt.

7. Antenneneinrichtung nach Anspruch 6, wobei, wenn eine erste Phasendifferenz eine Phasendifferenz zwischen dem Interferenzsignal und dem Kommunikationssignal ist, wenn die Phase des Kommunikationssignals in einem ersten Quadranten vorhanden ist, eine zweite Phasendifferenz eine Phasendifferenz ist zwischen dem Interferenzsignal und dem Kommunikationssignal, wenn die Phase des Kommunikationssignals in einem zweiten Quadranten vorhanden ist, eine dritte Phasendifferenz eine Phasendifferenz ist zwischen dem Interferenzsignal und dem Kommunikationssignal, wenn die Phase des Kommunikationssignals in einem dritten Quadranten vorhanden ist, und eine vierte Phasendifferenz eine Phasendifferenz ist zwischen dem Interferenzsignal und dem Kommunikationssignal, wenn die Phase des Kommunikationssignals in einem vierten Quadranten vorhanden ist, die Interferenzsignal-Erzeugungseinheit das Interferenzsignal, in dem die erste Phasendifferenz und die dritte Phasendifferenz Phasendifferenzen sind, die jeweils unterschiedliche Vorzeichen aufweisen, erzeugt, und das Interferenzsignal, in dem die zweite Phasendifferenz und die vierte Phasendifferenz Phasendifferenzen sind, die jeweils unterschiedliche Vorzeichen aufweisen, erzeugt.

8. Antenneneinrichtung nach Anspruch 2, wobei die Anregungsamplitudenverteilung-Einstellungseinheit (14) als die erste Anregungsamplitudenverteilung eine Anregungsamplitudenverteilung einstellt, von der eine Anregungsamplitude des Interferenzstrahls in Bezug auf eine Elementantenne an Enden unter der Vielzahl von Elementantennen kleiner ist als eine Anregungsamplitude des Interferenzstrahls in Bezug auf eine Elementantenne an anderen als den Enden.

9. Antenneneinrichtung nach Anspruch 2, wobei die Anregungsamplitudenverteilung-Einstellungseinheit als die zweite Anregungsamplitudenverteilung eine Anregungsamplitudenverteilung einstellt, von der eine Anregungsamplitude des Kommunikationsstrahls in Bezug auf eine Elementantenne an Enden unter der Vielzahl von Elementantennen kleiner ist als eine Anregungsamplitude des Kommunikationsstrahls in Bezug auf eine Elementantenne an anderen als den Enden.

10. Antenneneinrichtung nach Anspruch 1, wobei die Gruppenantenne eine lineare Gruppenantenne, eine planare Gruppenantenne oder eine konforme Gruppenantenne ist.

11. Antenneneinrichtung nach Anspruch 1, wobei
die Anregungsverteilung-Berechnungseinheit (91; 101) aufweist:

eine Anregungsamplitudenverteilung-Einstellungseinheit (92; 102) zum Einstellen eines Gesamtleistungswerts, der eine Summe aus Quadraten eines Produkts einer Amplitude des Kommunikationssignals und einer Anregungsamplitude des Kommunikationsstrahls in einer Elementantenne und einer Anregungsamplitude des Interferenzstrahls ist, als einen gemeinsamen eingestellten Wert in Bezug auf die Vielzahl von Elementantennen, die in der Gruppenantenne enthalten sind, und Einstellen jeweils einer ersten Anregungsamplitudenverteilung in Bezug auf die Vielzahl von Elementantennen und einer zweiten Anregungsamplitudenverteilung in Bezug auf die Vielzahl von Elementantennen;
eine Kommunikationsanregungsverteilung-Berechnungseinheit zum Einstellen einer Anregungsphasenverteilung eines Summenmusters in der Gruppenantenne, und Berechnen der Anregungsverteilung des Kommunikationsstrahls unter Verwendung der Anregungsphasenverteilung des Summenmusters, des Kommunikationssignals, und der zweiten Anregungsamplitudenverteilung; und
eine Interferenzanregungsverteilung-Berechnungseinheit zum Einstellen einer Anregungsphasenverteilung eines Differenzmusters in der Gruppenantenne als eine Anregungsphasenverteilung, bildend einen Nullpunkt eines Antennenmusters in einer Kommunikationsrichtung des Kommunikationssignals, und Berechnen der Anregungsverteilung des Interferenzstrahls unter Verwendung der Anregungsphasenverteilung des Differenzmusters, des Interferenzsignals und der ersten Anregungsamplitudenverteilung, und
die Anregungsamplitudenverteilung-Einstellungseinheit jeweils die erste Anregungsamplitudenverteilung und die zweite Anregungsamplitudenverteilung einstellt, wobei eine Summe aus Quadraten eines Produkts der Amplitude des Kommunikationssignals und einer Anregungsamplitude in Bezug auf die einzelne Elementantenne unter der Vielzahl von Elementantennen in der zweiten Anregungsamplitudenverteilung und einer Anregungsamplitude in Bezug auf die eine Elementantenne in der ersten Anregungsamplitudenverteilung der Gesamtleistungswert ist.

12. Antenneneinrichtung nach Anspruch 1, wobei die Interferenzsignal-Erzeugungseinheit (90) das Kommunikationssignal durch eine Amplitude des Kommunikationssignals teilt und das Interferenzsignal erzeugt durch Verschieben einer Phase eines Kommunikationssignals, das durch Teilung durch die Amplitude erhalten wird, um 90 Grad oder -90 Grad.

13. Antenneneinrichtung nach Anspruch 11, wobei die Anregungsamplitudenverteilung-Einstellungseinheit (92; 102) als die erste Anregungsamplitudenverteilung eine Anregungsamplitudenverteilung einstellt, von der eine Anregungsamplitude des Interferenzstrahls in Bezug auf eine Elementantenne an Enden unter der Vielzahl von Elementantennen kleiner ist als eine Anregungsamplitude des Interferenzstrahls in Bezug auf eine Elementantenne an anderen als den Enden.

14. Antenneneinrichtung nach Anspruch 11, wobei die Anregungsamplitudenverteilung-Einstellungseinheit (92; 102) als die zweite Anregungsamplitudenverteilung eine Anregungsamplitudenverteilung einstellt, von der eine Anregungsamplitude des Kommunikationsstrahls in Bezug auf eine Elementantenne an Enden unter der Vielzahl von Elementantennen kleiner ist als eine Anregungsamplitude des Kommunikationsstrahls in Bezug auf eine Elementantenne an anderen als den Enden.

15. Antennenanregungsverfahren, umfassend:

Erzeugen eines Kommunikationssignals, das ein zu kommunizierendes Signal ist, durch eine Kommunikationssignal-Erzeugungseinheit;
Erzeugen eines Interferenzsignals, um eine Interferenzwelle des Kommunikationssignals zu sein, durch Anpassen einer Phase des durch die Kommunikationssignal-Erzeugungseinheit erzeugten Kommunikationssignals, durch eine Interferenzsignal-Erzeugungseinheit;
Berechnen jeweils einer Anregungsverteilung eines Kommunikationsstrahls, der eine Funkwelle zum Übertragen des Kommunikationssignals ist, und einer Anregungsverteilung eines Interferenzstrahls, der eine Funkwelle zum Übertragen des Interferenzsignals ist, wobei eine Summe aus einem Quadrat einer Anregungsamplitude des Kommunikationsstrahls und einem Quadrat einer Anregungsamplitude des Interferenzstrahls für jede einer Vielzahl von Elementantennen zum Ausstrahlen von Trägerwellensignalen gleich ist, durch eine Anregungsverteilung-Berechnungseinheit;
Synthetisieren der Anregungsverteilung des Kommunikationsstrahls und der Anregungsverteilung des Interferenzstrahls, die jeweils durch die Anregungsverteilung-Berechnungseinheit berechnet sind, durch eine Anregungsverteilung-Synthetisierungseinheit; und
jeweils Steuern von Phasen derTrägerwellensignale, die an die Vielzahl von Elementantennen auszugeben sind, gemäß einer Anregungsverteilung nach Synthese durch die Anregungsverteilung-Synthetisierungseinheit, durch eine Phasensteuerungseinheit.

## Revendications

1. Dispositif d'antenne comprenant :

une antenne réseau incluant une pluralité d'antennes élémentaires (3-1 à 3-K) pour rayonner des signaux d'onde porteuse ;
une unité de génération de signal de communication (11) destinée à générer un signal de communication qui est un signal devant être communiqué ;
une unité de génération de signal de brouillage (12 ; 90) destinée à générer un signal de brouillage devant être une onde de brouillage du signal de communication, en ajustant une phase du signal de communication généré par l'unité de génération de signal de communication ;
une unité de calcul de distribution d'excitation (13 ; 91 ; 101) destinée à calculer chaque distribution parmi une distribution d'excitation d'un faisceau de communication, qui est une onde radio de transmission du signal de communication, et une distribution d'excitation d'un faisceau de brouillage, qui est une onde radio de transmission du signal de brouillage, dans lequel une somme d'un carré d'une amplitude d'excitation du faisceau de communication et d'un carré d'une amplitude d'excitation du faisceau de brouillage est la même pour chacune de la pluralité d'antennes élémentaires (3-1 à 3-K) ;
une unité de synthèse de distribution d'excitation (25) destinée à synthétiser la distribution d'excitation du faisceau de communication et la distribution d'excitation du faisceau de brouillage calculées chacune par l'unité de calcul de distribution d'excitation (13) ; et
une unité de commande de phase (30 ; 80) destinée à commander respectivement des phases des signaux d'onde porteuse à conférer à la pluralité d'antennes à élément (3-1 à 3-K) selon une distribution d'excitation après synthèse par l'unité de synthèse de distribution d'excitation (25).

2. Dispositif d'antenne selon la revendication 1, dans lequel
l'unité de calcul de distribution d'excitation (13) inclut :

une unité de définition de distribution d'amplitude d'excitation (14) destinée à définir une valeur de puissance totale qui est une somme des carrés d'une amplitude d'excitation du faisceau de communication et d'une amplitude d'excitation du faisceau de brouillage dans une antenne élémentaire, en tant qu'une valeur de consigne commune par rapport à la pluralité d'antennes élémentaires (3-1 à 3-K) incluses dans l'antenne réseau, et à définir chaque distribution parmi une première distribution d'amplitude d'excitation par rapport à la pluralité d'antennes élémentaires (3-1 à 3-K) et une seconde distribution d'amplitude d'excitation par rapport à la pluralité d'antennes élémentaires (3-1 à 3-K) ;

une unité de calcul de distribution d'excitation de communication (18) destinée à définir une distribution de phase d'excitation d'un diagramme de somme dans l'antenne réseau, et à calculer la distribution d'excitation du faisceau de communication en utilisant la distribution de phase d'excitation du diagramme de somme, le signal de communication et la seconde distribution d'amplitude d'excitation ; et

une unité de calcul de distribution d'excitation de brouillage (21) destinée à définir une distribution de phase d'excitation d'un diagramme de différence dans l'antenne réseau, en tant qu'une distribution de phase d'excitation formant un point zéro d'un diagramme d'antenne dans une direction de communication du signal de communication, et à calculer la distribution d'excitation du faisceau de brouillage en utilisant la distribution de phase d'excitation du diagramme de différence, le signal de brouillage et la première distribution d'amplitude d'excitation ; et

l'unité de définition de distribution d'amplitude d'excitation définit chaque distribution parmi la première distribution d'amplitude d'excitation et la seconde distribution d'amplitude d'excitation, dans lequel une somme des carrés d'une amplitude d'excitation par rapport à une antenne élémentaire parmi la pluralité d'antennes élémentaires (3-1 à 3-K) dans la première distribution d'amplitude d'excitation et d'une amplitude d'excitation par rapport à l'antenne élémentaire dans la seconde distribution d'amplitude d'excitation est la valeur de puissance totale.

3. Dispositif d'antenne selon la revendication 1, comprenant en outre :

une unité de génération de signal d'onde porteuse (1) destinée à générer un signal d'onde porteuse ; et

un module de distribution (2) destiné à distribuer le signal d'onde porteuse généré par l'unité de génération de signal d'onde porteuse, dans lequel

l'unité de commande de phase (30) inclut :

une pluralité de modules d'ajustement de phase (31-1 à 31-K), ajustant chacun une phase d'un signal d'onde porteuse parmi une pluralité des signaux d'onde porteuse distribués par le module de distribution et fournissant en sortie un signal d'onde porteuse, après ajustement de phase, à une antenne élémentaire parmi la pluralité d'antennes élémentaires; et

un contrôleur (32) destiné à commander respectivement des quantités d'ajustement des phases dans la pluralité de modules d'ajustement de phase conformément à la distribution d'excitation après la synthèse par l'unité de synthèse de distribution d'excitation.

4. Dispositif d'antenne selon la revendication 1, comprenant en outre

une unité de génération de signal d'onde porteuse (70) destinée à générer un signal d'onde porteuse qui est un signal numérique, dans lequel

l'unité de commande de phase (80) inclut :

une pluralité de processeurs de signal numérique (81-1 à 81-K) ajustant chacun une phase du signal d'onde porteuse généré par l'unité de génération de signal d'onde porteuse ;

une pluralité de convertisseurs numérique-analogique (83-1 à 83-K) convertissant chacun un signal d'onde porteuse dont la phase a été ajustée par un processeur de signal numérique parmi la pluralité de processeurs de signal numérique, en un signal analogique, et fournissant en sortie le signal analogique à une antenne élémentaire parmi la pluralité d'antennes élémentaires; et

un contrôleur (82) destiné à commander respectivement des quantités d'ajustement des phases dans la pluralité de processeurs de signal numérique conformément à la distribution d'excitation après la synthèse par l'unité de synthèse de distribution d'excitation.

5. Dispositif d'antenne selon la revendication 1, comprenant en outre

une unité de définition de distribution de phase (24) pour définir une distribution de phase de balayage de faisceau qui définit une direction de communication du signal de communication, dans lequel :

l'unité de synthèse de distribution d'excitation (25) synthétise la distribution d'excitation du faisceau de communication et la distribution d'excitation du faisceau de brouillage calculée par l'unité de calcul de distribution d'excitation, multiplie une distribution d'excitation synthétisée par la distribution de phase de balayage de faisceau définie par l'unité de définition de distribution de phase, et fournit en sortie une distribution d'excitation obtenue par la multiplication par la distribution de phase de balayage de faisceau, en tant que la distribution d'excitation après la synthèse à l'unité de commande de phase.

**6.** Dispositif d'antenne selon la revendication 1, dans lequel l'unité de génération de signal de brouillage (12) génère le signal de brouillage en déphasant le signal de communication de 90 degrés ou -90 degrés.

**7.** Dispositif d'antenne selon la revendication 6, dans lequel, lorsqu'une première différence de phase est une différence de phase entre le signal de brouillage et le signal de communication lorsque la phase du signal de communication existe dans un premier quadrant, une deuxième différence de phase est une différence de phase entre le signal de brouillage et le signal de communication lorsque la phase du signal de communication existe dans un deuxième quadrant, une troisième différence de phase est une différence de phase entre le signal de brouillage et le signal de communication lorsque la phase du signal de communication existe dans un troisième quadrant, et une quatrième différence de phase est une différence de phase entre le signal de brouillage et le signal de communication lorsque la phase du signal de communication existe dans un quatrième quadrant, l'unité de génération de signal de brouillage génère le signal de brouillage dans lequel la première différence de phase et la troisième différence de phase sont des différences de phase présentant respectivement des signes différents, et génère le signal de brouillage dans lequel la deuxième différence de phase et la quatrième différence de phase sont des différences de phase présentant respectivement des signes différents.

**8.** Dispositif d'antenne selon la revendication 2, dans lequel l'unité de définition de distribution d'amplitude d'excitation (14) définit, en tant que la première distribution d'amplitude d'excitation, une distribution d'amplitude d'excitation dont une amplitude d'excitation du faisceau de brouillage par rapport à une antenne élémentaire, à des extrémités parmi la pluralité d'antennes élémentaires, est plus petite qu'une amplitude d'excitation du faisceau de brouillage par rapport à une antenne élémentaire ailleurs qu'aux extrémités.

**9.** Dispositif d'antenne selon la revendication 2, dans lequel l'unité de définition de distribution d'amplitude d'excitation définit, en tant que la seconde distribution d'amplitude d'excitation, une distribution d'amplitude d'excitation dont une amplitude d'excitation du faisceau de communication par rapport à une antenne élémentaire, à des extrémités parmi la pluralité d'antennes élémentaires, est plus petite qu'une amplitude d'excitation du faisceau de communication par rapport à une antenne élémentaires auilleurs qu'aux extrémités.

**10.** Dispositif d'antenne selon la revendication 1, dans lequel l'antenne réseau est une antenne réseau linéaire, une antenne réseau planaire ou une antenne réseau conforme.

**11.** Dispositif d'antenne selon la revendication 1, dans lequel
l'unité de calcul de distribution d'excitation (91 ; 101) inclut :

une unité de définition de distribution d'amplitude d'excitation (92 ; 102) destinée à définir une valeur de puissance totale qui est une somme de carrés d'un produit d'une amplitude du signal de communication et d'une amplitude d'excitation du faisceau de communication dans une antenne élémentaire, et d'une amplitude d'excitation du faisceau de brouillage, en tant qu'une valeur de consigne commune par rapport à la pluralité d'antennes élémentaires incluses dans l'antenne réseau, et à définir chaque distribution parmi une première distribution d'amplitude d'excitation par rapport à la pluralité d'antennes élémentaires et une seconde distribution d'amplitude d'excitation par rapport à la pluralité d'antennes élémentaires;
une unité de calcul de distribution d'excitation de communication destinée à définir une distribution de phase d'excitation d'un diagramme de somme dans l'antenne réseau, et à calculer la distribution d'excitation du faisceau de communication en utilisant la distribution de phase d'excitation du diagramme de somme, le signal de communication, et la seconde distribution d'amplitude d'excitation ; et
une unité de calcul de distribution d'excitation de brouillage destinée à définir une distribution de phase d'excitation d'un diagramme de différence dans l'antenne réseau, en tant qu'une distribution de phase d'excitation formant un point zéro d'un diagramme d'antenne dans une direction de communication du signal de communication, et à calculer la distribution d'excitation du faisceau de brouillage en utilisant la distribution de phase d'excitation du diagramme de différence, le signal de brouillage et la première distribution d'amplitude d'excitation ; et
l'unité de définition de distribution d'amplitude d'excitation définit chaque distribution parmi la première distribution d'amplitude d'excitation et la seconde distribution d'amplitude d'excitation, dans lequel une somme des carrés d'un produit de l'amplitude du signal de communication et d'une amplitude d'excitation par rapport à ladite une antenne élémentaire parmi la pluralité d'antennes élémentaires dans la seconde distribution d'amplitude d'excitation, et d'une amplitude d'excitation par rapport à une antenne élémentaire dans la première distribution d'amplitude d'excitation, est la valeur de puissance totale.

**12.** Dispositif d'antenne selon la revendication 1, dans lequel l'unité de génération de signal de brouillage (90) divise le signal de communication par une amplitude du signal de communication, et génère le signal de brouillage en déphasant un signal de communication, obtenu par la division par l'amplitude, de 90 degrés ou -90 degrés.

**13.** Dispositif d'antenne selon la revendication 11, dans lequel l'unité de définition de distribution d'amplitude d'excitation (92 ; 102) définit, en tant que la première distribution d'amplitude d'excitation, une distribution d'amplitude d'excitation dont une amplitude d'excitation du faisceau de brouillage par rapport à une antenne élémentaire, à des extrémités parmi la pluralité d'antennes élémentaires, est plus petite qu'une amplitude d'excitation du faisceau de brouillage par rapport à une antenne élémentaires ailleurs qu'aux extrémités.

**14.** Dispositif d'antenne selon la revendication 11, dans lequel l'unité de définition de distribution d'amplitude d'excitation (92 ; 102) définit, en tant que la seconde distribution d'amplitude d'excitation, une distribution d'amplitude d'excitation dont une amplitude d'excitation du faisceau de communication par rapport à une antenne élémentaire, à des extrémités parmi la pluralité d'antennes élémentaires, est plus petite qu'une amplitude d'excitation du faisceau de communication par rapport à une antenne élémentaire ailleurs qu'aux extrémités.

**15.** Procédé d'excitation d'antenne comprenant:

la génération d'un signal de communication qui est un signal devant être communiqué, par une unité de génération de signal de communication ;
la génération d'un signal de brouillage devant être une onde de brouillage du signal de communication, en ajustant une phase du signal de communication généré par l'unité de génération de signal de communication, par le biais d'une unité de génération de signal de brouillage ;
le calcul de chaque distribution parmi une distribution d'excitation d'un faisceau de communication, qui est une onde radio permettant de transmettre le signal de communication, et une distribution d'excitation d'un faisceau de brouillage, qui est une onde radio permettant de transmettre le signal de brouillage, dans lequel une somme d'un carré d'une amplitude d'excitation du faisceau de communication et d'un carré d'une amplitude d'excitation du faisceau de brouillage est la même pour chacune d'une pluralité d'antennes élémentaires pour rayonner des signaux d'onde porteuse, par une unité de calcul de distribution d'excitation ;
la synthèse de la distribution d'excitation du faisceau de communication et la distribution d'excitation du faisceau de brouillage, lesquelles sont calculées chacune par l'unité de calcul de distribution d'excitation, par une unité de synthèse de distribution d'excitation ; et
la commande respectivement des phases des signaux d'onde porteuse à conférer à la pluralité d'antennes élémentaires, selon une distribution d'excitation après synthèse par l'unité de synthèse de distribution d'excitation, par une unité de commande de phase.

# FIG. 1

# FIG. 2

| Communication Signal Generating Circuit (41) | Interference Signal Generating Circuit (42) | Excitation Amplitude Distribution Setting Circuit (43) | Communication Excitation Distribution Calculating Circuit (44) |
| Interference Excitation Distribution Calculating Circuit (45) | Phase Distribution Setting Circuit (46) | Excitation Distribution Synthesizing Circuit (47) | Display Circuit (48) |

# FIG. 3

| Processor (60) | Memory (61) |
| Output Interface Device (62) | Display Interface Device (63) |

# FIG. 4

```
           START
             │
             ▼
┌────────────────────────────┐
│ Carrier Wave Signal Generating Unit │ ──ST1
│   Generates Carrier Wave Signal    │
└────────────────────────────┘
             │
             ▼
┌────────────────────────────┐
│ Distributor Distributes Carrier Wave Signal │ ──ST2
└────────────────────────────┘
             │
             ▼
┌────────────────────────────┐
│     Phase Adjuster Adjusts Phase Of     │ ──ST3
│         Carrier Wave Signal         │
└────────────────────────────┘
             │
             ▼
┌────────────────────────────┐
│  Amplifier Amplifies Carrier Wave Signal  │ ──ST4
└────────────────────────────┘
             │
             ▼
┌────────────────────────────┐
│      Element Antenna Radiates      │ ──ST5
│         Carrier Wave Signal         │
└────────────────────────────┘
             │
             ▼
           END
```

# FIG. 5

```
           START
             │
             ▼
┌────────────────────────────┐
│  First Excitation Amplitude Distribution  │
│    Setting Unit Sets First Excitation    │ ──ST11
│        Amplitude Distribution A        │
└────────────────────────────┘
             │
             ▼
┌────────────────────────────┐
│ Second Excitation Amplitude Distribution │
│   Setting Unit Sets Second Excitation   │ ──ST12
│        Amplitude Distribution B        │
└────────────────────────────┘
             │
             ▼
           END
```

# FIG. 6

START

Communication Signal Generating Unit
Generates Communication Signal — ST21

Sum Pattern Distribution Setting Unit
Sets Excitation Phase Distribution Of
Sum Pattern — ST22

Communication Excitation Distribution
Calculation Processing Unit
Calculates Excitation Distribution Of
Communication Beam — ST23

END

# FIG. 7

START

Interference Signal Generating Unit
Generates Interference Signal From
Communication Signal — ST31

Difference Pattern Distribution Setting Unit
Sets Excitation Phase Distribution Of
Difference Pattern — ST32

Interference Excitation Distribution
Calculation Processing Unit
Calculates Excitation Distribution Of
Interference Beam — ST33

END

# FIG. 8

```
        ( START )
            |
            v
  ┌──────────────────────┐
  │  Phase Distribution   │
  │ Setting Unit Sets Beam│ ~ST41
  │Scanning Phase Distribution│
  └──────────────────────┘
            |
            v
  ┌──────────────────────┐
  │ Excitation Distribution│
  │Synthesizing Unit Calculates│ ~ST42
  │Synthesized Excitation Distribution│
  └──────────────────────┘
            |
            v
        (  END  )
```

# FIG. 9

● Excitation Amplitude Of
Communication Beam

▲ Excitation Amplitude Of
Interference Beam

Element Number

# FIG. 10

# FIG. 11

# FIG. 12

Communication Direction

# FIG. 13

FIG. 14

Amplitude [dB]

Element Number

● Excitation Amplitude Of
Communication Beam

▲ Excitation Amplitude Of
Interference Beam

FIG. 15

# FIG. 16

```
                    ( START )
                        │
                        ▼
  ┌──────────────────────────────────┐
  │  Carrier Wave Signal Generating   │
  │    Unit Generates Carrier Wave    │─── ST51
  │    Signal That Is Digital Signal  │
  └──────────────────────────────────┘
                        │
                        ▼
  ┌──────────────────────────────────┐
  │ Digital Signal Processor Adjusts  │
  │    Phase Of Carrier Wave Signal   │─── ST52
  │   With Digital Signal Processing  │
  └──────────────────────────────────┘
                        │
                        ▼
  ┌──────────────────────────────────┐
  │   D/A Converter Converts Carrier  │
  │   Wave Signal Into Analog Signal  │─── ST53
  └──────────────────────────────────┘
                        │
                        ▼
  ┌──────────────────────────────────┐
  │ Amplifier Amplifies Carrier Wave  │─── ST54
  │              Signal               │
  └──────────────────────────────────┘
                        │
                        ▼
  ┌──────────────────────────────────┐
  │      Element Antenna Radiates     │─── ST55
  │        Carrier Wave Signal        │
  └──────────────────────────────────┘
                        │
                        ▼
                    ( END )
```

# FIG. 17

# FIG. 18

Phase
Adjusting
Unit
94

Amplitude
Normalizing
Unit
93

Interference
Signal
Generating
Unit
90

d(t)

# FIG. 19

START

First Excitation Amplitude
Distribution Setting Unit Sets
First Excitation Amplitude Distribution A
ST61

Second Excitation Amplitude
Distribution Setting Unit Sets
Second Excitation Amplitude Distribution B
ST62

Amplitude Adjusting Unit
Adjusts Excitation Amplitude Of
Communication Beam
ST63

END

## FIG. 20

```
        ┌─────────────┐
        │    START    │
        └──────┬──────┘
               │
               ▼
   ┌───────────────────────────┐
   │  Amplitude Normalizing Unit│
   │     Normalizes Amplitude   │──── ST71
   │   Of Communication Signal  │
   └─────────────┬─────────────┘
                 │
                 ▼
   ┌───────────────────────────┐
   │ Phase Adjusting Unit Adjusts Phase │──── ST72
   │     Of Communication Signal│
   └─────────────┬─────────────┘
                 │
                 ▼
        ┌─────────────┐
        │     END     │
        └─────────────┘
```

## FIG. 21

## FIG. 22

# FIG. 23

# FIG. 24

# FIG. 25

```
        START
          │
          ▼
┌─────────────────────────────────┐
│   Second Excitation Amplitude    │
│   Distribution Setting Unit Sets │ ──ST81
│ Second Excitation Amplitude Distribution B │
└─────────────────────────────────┘
          │
          ▼
┌─────────────────────────────────┐
│      Amplitude Adjusting Unit    │
│   Adjusts Excitation Amplitude Of│ ──ST82
│         Communication Beam       │
└─────────────────────────────────┘
          │
          ▼
┌─────────────────────────────────┐
│ First Excitation Amplitude Distribution │
│          Setting Unit Sets       │ ──ST83
│  First Excitation Amplitude Distribution A │
└─────────────────────────────────┘
          │
          ▼
         END
```

# FIG. 26

# FIG. 27

FIG. 28A

FIG. 28B

FIG. 28C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6042045 B

**Non-patent literature cited in the description**

- **M. P. DALY.** Directional Modulation Technique for Phased Arrays. *IEEE Trans. Antennas Propagat,* 2009, vol. 57, 2633-2640